# EUROPEAN PATENT APPLICATION

(11) **EP 4 819 716 A1**
(43) Date of publication of application: **07.10.2026**
(21) Application number: 24915193.7
(22) Date of filing: 27.12.2024
(51) Int. Cl.: H04W 72/044

(54) **COMMUNICATION METHOD AND COMMUNICATION APPARATUS**

(30) Priority: 05.01.2024 CN 202410029173
(71) Applicant: Huawei Technologies Co., Ltd., Shenzhen, Guangdong 518129 (CN)
(72) Inventor: YU, Tianhang, Shenzhen, Guangdong 518129 (CN); LUO, Hejia, Shenzhen, Guangdong 518129 (CN); KONG, Chuili, Shenzhen, Guangdong 518129 (CN); WANG, Jun, Shenzhen, Guangdong 518129 (CN)
(74) Representative: Körber, Martin Hans
(86) International application number: PCT/CN2024/143204
(87) International publication number: WO 2025/145979

(57) **Abstract**

This application provides a communication method and a communication apparatus. The method includes: receiving a first synchronization signal; and receiving a second synchronization signal, where a width of a transmission beam for the first synchronization signal is greater than a width of a transmission beam for the second synchronization signal, and a coverage area of the transmission beam for the first synchronization signal includes coverage areas of transmission beams for a plurality of second synchronization signals. In this method, the first synchronization signal is sent by using a wider beam, so that within a period of time, a quantity of first synchronization signals that cover a terminal device is greater than a quantity of second synchronization signals that cover the terminal device, thereby reducing the time required for the terminal device during initial access.

## Description

This application claims priority to Chinese Patent Application No. 202410029173.X, filed with the China National Intellectual Property Administration on January 5, 2024 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Non-terrestrial networks (non-terrestrial networks, NTN), such as satellite communication, have significant advantages including global coverage, long-distance transmission, flexible networking, convenient deployment, and independence from geographical constraints, and have been widely applied to a plurality of fields such as maritime communication, positioning and navigation, disaster relief, scientific experiments, video broadcasting, and earth observation.

In a non-terrestrial network scenario, a network device and a terminal device need to perform beam alignment for subsequent data transmission. During beam alignment, the network device periodically sends SSBs in different beam directions, and the terminal device may periodically adjust a reception beam direction to attempt to search for the SSBs. When the network device needs to perform sweeping across a large quantity of transmission beam directions, and a phased-array terminal has a large quantity of selectable reception beam directions, for example, up to hundreds of beam directions, the terminal device needs to complete beam sweeping across a large quantity of directions to implement alignment with the network device. Therefore, how to reduce the time required for the terminal device during initial access is an urgent problem to be resolved in the art.

### SUMMARY

Embodiments of this application provide a communication method and a communication apparatus, to reduce the time required for a terminal device during initial access.

According to a first aspect, a communication method is provided. The method includes: receiving a first synchronization signal; and receiving a second synchronization signal, where a width of a transmission beam for the first synchronization signal is greater than a width of a transmission beam for the second synchronization signal, and a coverage area of the transmission beam for the first synchronization signal includes coverage areas of transmission beams for a plurality of second synchronization signals.

In an embodiment of this application, a terminal device receives a first synchronization signal and a second synchronization signal that are sent by a network device, where a width of a transmission beam for the first synchronization signal is greater than a width of a transmission beam for the second synchronization signal, and a coverage area of the transmission beam for the first synchronization signal includes coverage areas of transmission beams for a plurality of second synchronization signals, so that within a period of time, a quantity of first synchronization signals that cover the terminal device is greater than a quantity of second synchronization signals that cover the terminal device. Therefore, when the terminal device adjusts a reception beam direction to attempt to receive a synchronization signal from the network device, in comparison with directly searching for the second synchronization signal, the terminal device can more quickly find the first synchronization signal, so that a reception beam of the terminal device can be more quickly aligned with the network device, reducing time required for the terminal device during initial access.

In this embodiment of this application, the first synchronization signal is transmitted by using a beam wider than that for the second synchronization signal, so that a coverage area on the ground of the transmission beam for the first synchronization signal can be increased, to reduce time during which the transmission beam cannot cover a location of the terminal device due to beam hopping, and prevent the terminal device from failing to accurately point to the network device and failing to receive a downlink signal sent by the network device due to excessively long time without a beam service.

With reference to the first aspect, in some implementations of the first aspect, a quantity of first synchronization signals is greater than or equal to a quantity of second synchronization signals within a first duration.

Specifically, the first synchronization signal may be in a first signal set, and the first signal set may be continuously sent. The second synchronization signal may be in a second signal set, and the second signal set may be sent periodically. Because the first synchronization signal is sent by using a wide beam and the second synchronization signal is sent by using a narrow beam, within a period of time, a quantity of transmission beams for first synchronization signals that cover the terminal device is greater than a quantity of transmission beams for second synchronization signals that cover the terminal device.

With reference to the first aspect, in some implementations of the first aspect, the receiving the second synchronization signal includes: receiving the second synchronization signal based on the received first synchronization signal.

With reference to the first aspect, in some implementations of the first aspect, receiving the second synchronization signal based on the received first synchronization signal includes: receiving the second synchronization signal based on a reception beam direction of the first synchronization signal or a reception beam codebook of the first synchronization signal.

In this embodiment of this application, the terminal device receives the second synchronization signal based on the received first synchronization signal, where the width of the transmission beam for the first synchronization signal is greater than the width of the transmission beam for the second synchronization signal, and the coverage area of the transmission beam for the first synchronization signal includes coverage areas of transmission beams for a plurality of second synchronization signals, so that within a period of time, a quantity of first synchronization signals that cover the terminal device is greater than a quantity of second synchronization signals that cover the terminal device. Therefore, in comparison with directly receiving the second synchronization signal, the terminal device can be more quickly aligned with the network device, so that the terminal performs detection on the second synchronization signal based on alignment with the network device, reducing time required for the terminal device during initial access.

With reference to the first aspect, in some implementations of the first aspect, the second synchronization signal has a same frequency domain center point as the first synchronization signal.

In this embodiment of this application, after detecting the first synchronization signal, the terminal device may perform detection on the second synchronization signal in a frequency band with the same frequency domain center point. Therefore, detection overheads of the terminal device are reduced.

With reference to the first aspect, in some implementations of the first aspect, the first synchronization signal includes a synchronization signal generated based on a physical cell identifier PCI or a part of the PCI, and the second synchronization signal includes a synchronization signal generated based on the PCI or a part of the PCI.

With reference to the first aspect, in some implementations of the first aspect, the first synchronization signal includes a primary synchronization signal PSS, and the second synchronization signal includes a secondary synchronization signal SSS.

It should be understood that the first synchronization signal may alternatively be a signal in another form that has a same function as the PSS, and the second synchronization signal may alternatively be a signal in another form that has a same function as the SSS and a PBCH. This is not limited in embodiments of this application.

With reference to the first aspect, in some implementations of the first aspect, a sequence length of the PSS is greater than a sequence length of the SSS.

In this embodiment of this application, because a beam width of the PSS is greater than a beam width of the SSS, and a wide beam causes a loss of beam gain, the network device sends the PSS by using a sequence longer than that of the SSS, so that the terminal device can obtain a higher detection peak when detecting the PSS, and accuracy of determining, by the terminal device, that the PSS is received is improved, enhancing beam alignment performance between the terminal device and the network device, and compensating for the loss of the beam gain caused by the wide beam.

With reference to the first aspect, in some implementations of the first aspect, the first synchronization signal includes a first primary synchronization signal, and the second synchronization signal includes a synchronization signal/PBCH block SSB.

With reference to the first aspect, in some implementations of the first aspect, the receiving the second synchronization signal includes: receiving a second primary synchronization signal in the SSB based on the received first primary synchronization signal, where the second primary synchronization signal is in one-to-one correspondence with the first primary synchronization signal, and a sequence of the second primary synchronization signal is determined based on a sequence of the first primary synchronization signal.

Specifically, the first primary synchronization signal and the second primary synchronization signal may be the same or may be different. The first primary synchronization signal and the second primary synchronization signal may be sequences in different forms that are generated by using same information. The second primary synchronization signal may be determined based on the first primary synchronization signal.

In this embodiment of this application, the second primary synchronization signal is in one-to-one correspondence with the first primary synchronization signal, and the sequence of the second primary synchronization signal is determined based on the sequence of the first primary synchronization signal. In other words, the terminal device may determine information about the second primary synchronization signal based on information in the received first primary synchronization signal. Therefore, the terminal device does not need to perform blind detection during receiving of the second primary synchronization signal, reducing detection overheads of the terminal device.

With reference to the first aspect, in some implementations of the first aspect, a sequence length of the first primary synchronization signal is greater than a sequence length of the second primary synchronization signal.

In this embodiment of this application, because a beam width of the first primary synchronization signal is greater than a beam width of the second primary synchronization signal, and a wide beam causes a loss of beam gain, the network device sends the first primary synchronization signal by using a sequence longer than that of the second primary synchronization signal, so that the terminal device can obtain a higher detection peak when detecting the first primary synchronization signal, and accuracy of determining, by the terminal device, that the first primary synchronization signal is received is improved, enhancing beam alignment performance between the terminal device and the network device, and compensating for the loss of the beam gain caused by the wide beam.

With reference to the first aspect, in some implementations of the first aspect, the receiving the second synchronization signal further includes: receiving a secondary synchronization signal SSS in the SSB based on the received second primary synchronization signal.

Specifically, the SSS definitely exists after a narrow-beam PSS. For example, the SSS may be located on the 2^{nd} symbol after the narrow-beam PSS. Therefore, when performing detection on the SSS, the terminal device can detect the SSS by performing blind detection only once at a determined time domain position, reducing system overheads of the terminal device.

In this embodiment of this application, once the terminal device detects the second primary synchronization signal, the terminal device detects the second synchronization signal. Therefore, the SSS definitely exists after the second primary synchronization signal. In this way, the terminal device avoids repeatedly performing an SSS blind detection operation to determine whether a symbol is the SSS, reducing blind detection overheads for performing detection on the SSS by the terminal device.

With reference to the first aspect, in some implementations of the first aspect, the method further includes: receiving a physical broadcast channel PBCH based on the second primary synchronization signal and the SSS.

Specifically, the terminal device calculates *N_{ID}* based on ${N}_{ID}^{\left(2\right)}$ and ${N}_{ID}^{\left(1\right)}$ in the detected PSS and SSS, parses a PBCH in the second synchronization signal to obtain a PBCH payload and a MIB, and further parses a SIB message. The terminal device completes initial access based on a MIB message and the SIB message.

With reference to the first aspect, in some implementations of the first aspect, the first synchronization signal is repeatedly sent on a plurality of frequency bands.

Further, the first synchronization signal repeatedly sent by the network device in a plurality of frequency bands may be a same sequence, or may be different sequences that carry same information.

In this embodiment of this application, because a beam width of the first synchronization signal is greater than a beam width of the second synchronization signal, and a wide beam causes a loss of beam gain, the network device repeatedly sends the first synchronization signal on the plurality of frequency bands, so that the terminal device can receive more first synchronization signals within a period of time, increasing an opportunity for the terminal device to receive a first synchronization signal whose power meets a requirement, and reducing time required for the terminal device during initial access.

With reference to the first aspect, in some implementations of the first aspect, the receiving the second synchronization signal includes: receiving the SSS on the 2^{nd} symbol after the received PSS.

With reference to the first aspect, in some implementations of the first aspect, the receiving the second primary synchronization signal in the SSB includes: receiving the second primary synchronization signal on the 1^{st} symbol after the received first synchronization signal.

With reference to the first aspect, in some implementations of the first aspect, the receiving the secondary synchronization signal SSS in the SSB includes: receiving the SSS on the 2^{nd} symbol after the received second primary synchronization signal.

With reference to the first aspect, in some implementations of the first aspect, the first synchronization signal is repeatedly sent in time domain.

According to a second aspect, a communication method is provided, including: sending a first synchronization signal; and sending a second synchronization signal, where a width of a transmission beam for the first synchronization signal is greater than a width of a transmission beam for the second synchronization signal, and a coverage area of the transmission beam for the first synchronization signal includes coverage areas of transmission beams for a plurality of second synchronization signals.

With reference to the second aspect, in some implementations of the second aspect, a quantity of first synchronization signals is greater than or equal to a quantity of second synchronization signals within a first duration.

With reference to the second aspect, in some implementations of the second aspect, the second synchronization signal has a same frequency domain center point as the first synchronization signal.

With reference to the second aspect, in some implementations of the second aspect, the first synchronization signal includes a synchronization signal generated based on a physical cell identifier PCI or a part of the PCI, and the second synchronization signal includes a synchronization signal generated based on the PCI or a part of the PCI.

With reference to the second aspect, in some implementations of the second aspect, the first synchronization signal includes a first primary synchronization signal PSS, and the second synchronization signal includes a secondary synchronization signal SSS.

With reference to the second aspect, in some implementations of the second aspect, a sequence length of the primary synchronization signal is greater than a sequence length of the secondary synchronization signal.

With reference to the second aspect, in some implementations of the second aspect, the first synchronization signal includes a first primary synchronization signal PSS, the second synchronization signal includes a synchronization signal/PBCH block SSB, the SSB includes a second primary synchronization signal, the second primary synchronization signal is in one-to-one correspondence with the first primary synchronization signal, and a sequence of the second primary synchronization signal is determined based on a sequence of the first primary synchronization signal.

With reference to the second aspect, in some implementations of the second aspect, a sequence length of the first primary synchronization signal is greater than a sequence length of the second primary synchronization signal.

With reference to the second aspect, in some implementations of the second aspect, the sending the first synchronization signal includes: repeatedly sending the first synchronization signal on a plurality of frequency bands.

According to a third aspect, a communication apparatus is provided. The apparatus includes a transceiver unit. The transceiver unit is configured to receive a first synchronization signal; and the transceiver unit is further configured to receive a second synchronization signal, where a width of a transmission beam for the first synchronization signal is greater than a width of a transmission beam for the second synchronization signal, and a coverage area of the transmission beam for the first synchronization signal includes coverage areas of transmission beams for a plurality of second synchronization signals.

With reference to the third aspect, in some implementations of the third aspect, a quantity of first synchronization signals is greater than or equal to a quantity of second synchronization signals within a first duration.

With reference to the third aspect, in some implementations of the third aspect, receiving the second synchronization signal includes: receiving the second synchronization signal based on the received first synchronization signal.

With reference to the third aspect, in some implementations of the third aspect, receiving the second synchronization signal based on the received first synchronization signal includes: receiving the second synchronization signal based on a reception beam direction of the first synchronization signal or a reception beam codebook of the first synchronization signal.

With reference to the third aspect, in some implementations of the third aspect, the second synchronization signal has a same frequency domain center point as the first synchronization signal.

With reference to the third aspect, in some implementations of the third aspect, the first synchronization signal includes a synchronization signal generated based on a physical cell identifier PCI or a part of the PCI, and the second synchronization signal includes a synchronization signal generated based on the PCI or a part of the PCI.

With reference to the third aspect, in some implementations of the third aspect, the first synchronization signal includes a primary synchronization signal PSS, and the second synchronization signal includes a secondary synchronization signal SSS.

With reference to the third aspect, in some implementations of the third aspect, a sequence length of the PSS is greater than a sequence length of the SSS.

With reference to the third aspect, in some implementations of the third aspect, the first synchronization signal includes a first primary synchronization signal, and the second synchronization signal includes a synchronization signal/PBCH block SSB.

With reference to the third aspect, in some implementations of the third aspect, receiving the second synchronization signal includes: receiving a second primary synchronization signal in the SSB based on the received first primary synchronization signal, where the second primary synchronization signal is in one-to-one correspondence with the first primary synchronization signal, and a sequence of the second primary synchronization signal is determined based on a sequence of the first primary synchronization signal.

With reference to the third aspect, in some implementations of the third aspect, a sequence length of the first primary synchronization signal is greater than a sequence length of the second primary synchronization signal.

With reference to the third aspect, in some implementations of the third aspect, receiving the second synchronization signal further includes: receiving a secondary synchronization signal SSS in the SSB based on the received second primary synchronization signal.

With reference to the third aspect, in some implementations of the third aspect, the apparatus further includes a processing unit. The processing unit is configured to receive a physical broadcast channel PBCH based on the second primary synchronization signal and the SSS.

With reference to the third aspect, in some implementations of the third aspect, the first synchronization signal is repeatedly sent on a plurality of frequency bands.

With reference to the third aspect, in some implementations of the third aspect, the transceiver unit is further configured to receive the SSS on the 2^{nd} symbol after the received PSS.

With reference to the third aspect, in some implementations of the third aspect, the transceiver unit is further configured to receive the second primary synchronization signal on the 1^{st} symbol after the received first synchronization signal.

With reference to the third aspect, in some implementations of the third aspect, the transceiver unit is further configured to receive the SSS on the 2^{nd} symbol after the received second primary synchronization signal.

With reference to the third aspect, in some implementations of the third aspect, the transceiver unit is further configured to repeatedly send the first synchronization signal in time domain.

According to a fourth aspect, a communication apparatus is provided, including a transceiver unit. The transceiver unit is configured to send a first synchronization signal; and the transceiver unit is further configured to send a second synchronization signal, where a width of a transmission beam for the first synchronization signal is greater than a width of a transmission beam for the second synchronization signal, and a coverage area of the transmission beam for the first synchronization signal includes coverage areas of transmission beams for a plurality of second synchronization signals.

With reference to the fourth aspect, in some implementations of the fourth aspect, a quantity of first synchronization signals is greater than or equal to a quantity of second synchronization signals within a first duration.

With reference to the fourth aspect, in some implementations of the fourth aspect, the second synchronization signal has a same frequency domain center point as the first synchronization signal.

With reference to the fourth aspect, in some implementations of the fourth aspect, the first synchronization signal includes a synchronization signal generated based on a physical cell identifier PCI or a part of the PCI, and the second synchronization signal includes a synchronization signal generated based on the PCI or a part of the PCI.

With reference to the fourth aspect, in some implementations of the fourth aspect, the first synchronization signal includes a first primary synchronization signal PSS, and the second synchronization signal includes a secondary synchronization signal SSS.

With reference to the fourth aspect, in some implementations of the fourth aspect, a sequence length of the primary synchronization signal is greater than a sequence length of the secondary synchronization signal.

With reference to the fourth aspect, in some implementations of the fourth aspect, the first synchronization signal includes a first primary synchronization signal PSS, the second synchronization signal includes a synchronization signal/PBCH block SSB, the SSB includes a second primary synchronization signal, the second primary synchronization signal is in one-to-one correspondence with the first primary synchronization signal, and a sequence of the second primary synchronization signal is determined based on a sequence of the first primary synchronization signal.

With reference to the fourth aspect, in some implementations of the fourth aspect, a sequence length of the first primary synchronization signal is greater than a sequence length of the second primary synchronization signal.

With reference to the fourth aspect, in some implementations of the fourth aspect, sending the first synchronization signal includes: repeatedly sending the first synchronization signal on a plurality of frequency bands.

According to a fifth aspect, a communication apparatus is provided, including a processor coupled to a memory. The memory is configured to store a computer program, and the processor is configured to run the computer program, to cause the communication apparatus to perform the method according to any one of the first aspect and the possible implementations of the first aspect.

According to a sixth aspect, a communication apparatus is provided, including a processor coupled to a memory. The memory is configured to store a computer program, and the processor is configured to run the computer program, to cause the communication apparatus to perform the method according to any one of the second aspect and the possible implementations of the second aspect.

According to a seventh aspect, a computer-readable storage medium is provided, where the computer-readable storage medium stores a computer program. When the computer program is executed by a computer, the computer is caused to perform the communication method according to any one of the first aspect and the implementations of the first aspect, or the second aspect and the implementations of the second aspect that can be implemented.

According to an eighth aspect, a computer program product including instructions is provided. When the computer program product runs on a computer, the computer is caused to perform the communication method according to any one of the first aspect and the implementations of the first aspect, or the second aspect and the implementations of the second aspect that can be implemented.

According to a ninth aspect, a chip is provided. The chip includes a processor and a data interface. The processor reads, through the data interface, instructions stored in a memory, to perform the communication method according to any one of the first aspect and the implementations of the first aspect, or the second aspect and the implementations of the second aspect that can be implemented.

With reference to the ninth aspect, in a possible implementation, the processor is coupled to the memory through an interface.

With reference to the ninth aspect, in a possible implementation, the chip system further includes the memory. The memory stores a computer program or computer instructions.

### BRIEF DESCRIPTION OF DRAWINGS

FIG. 1 is a diagram of a system architecture;
FIG. 2 is a diagram of a pattern of an SSB set;
FIG. 3 is a diagram of another pattern of an SSB set;
FIG. 4 is a diagram of a design of a broadcast signal according to an embodiment of this application;
FIG. 5 is a diagram of a structure of a broadcast signal according to an embodiment of this application;
FIG. 6 is a flowchart of initial access of a terminal device according to an embodiment of this application;
FIG. 7 is a diagram of another design of a broadcast signal according to an embodiment of this application;
FIG. 8 is a diagram of still another design of a broadcast signal according to an embodiment of this application;
FIG. 9 is a diagram of another structure of a broadcast signal according to an embodiment of this application;
FIG. 10 is another flowchart of initial access of a terminal device according to an embodiment of this application;
FIG. 11 is a diagram of still another design of a broadcast signal according to an embodiment of this application;
FIG. 12 is a diagram of a structure of a communication apparatus according to an embodiment of this application; and
FIG. 13 is a diagram of a communication architecture according to an embodiment of this application.

### DESCRIPTION OF EMBODIMENTS

The following describes technical solutions of this application with reference to accompanying drawings.

The technical solutions in embodiments of this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a future communication network. The technical solutions provided in this application may be further applied to device to device (device to device, D2D) communication, vehicle-to-everything (vehicle-to-everything, V2X) communication, machine to machine (machine to machine, M2M) communication, machine type communication (machine type communication, MTC), or an internet of things (internet of things, IoT) communication system. The technical solutions provided in this application may be further applied to a low frequency scenario, a high frequency scenario, terahertz, optical communication, a licensed (licensed) frequency band, an unlicensed (unlicensed) frequency band, or the like.

A terminal device (for example, user equipment (user equipment, UE)) in embodiments of this application includes various devices having a wireless communication function, and the terminal device may be configured to be connected to a person, an object, a machine, and the like. The terminal device may be widely used in various scenarios, such as cellular communication, D2D, V2X, peer to peer (peer to peer, P2P), M2M, MTC, IoT, virtual reality (virtual reality, VR), augmented reality (augmented reality, AR), industrial control, autonomous driving, telemedicine, a smart grid, smart furniture, a smart office, smart wearable, smart transportation, a smart city drone, a robot, remote sensing, passive sensing, positioning, navigation and tracking, and autonomous delivery. The terminal device may be a terminal in any one of the foregoing scenarios, such as an MTC terminal or an IoT terminal. The terminal device may be user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, an aircraft (for example, an uncrewed aerial vehicle, a helicopter, a multi-helicopter, a quadcopter, or an airplane), a ship, a remote control device, a smart home device, an industrial device, an apparatus built in the foregoing device (for example, a communication module, a modem, or a chip in the foregoing device), or another processing device connected to a wireless modem. It should be understood that in some scenarios, the terminal device may alternatively serve as a base station. For example, the terminal device may serve as a scheduling entity that provides a sidelink signal between terminal devices in a V2X scenario, a D2D scenario, a P2P scenario, or the like.

A network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point, a primary station, a secondary station, a multi-standard radio (motor slide retainer, MSR) node, a home NodeB, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, or a radio unit (radio unit, RU). The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, or M2M communication, a network-side device in a future communication network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be an access network device in an open access network (open RAN, O-RAN, or ORAN) or a cloud radio access network (cloud radio access network, CRAN). Alternatively, the network device may be a satellite in a satellite communication system.

In some deployments, the network device mentioned in embodiments of this application may be a device including a CU or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node.

It should be noted that in different systems, the CU (or the CU-CP and the CU-UP), the DU, or the RU may have different names, but a person skilled in the art may understand meanings of the names. For example, in an ORAN system, the CU may also be referred to as an open central unit (open central unit, O-CU) or an open CU, the DU may also be referred to as an open distributed unit (open distributed unit, O-DU), the CU-CP may also be referred to as an open central unit-control plane (open central unit control plane, O-CU-CP), the CU-UP may also be referred to as an open central unit-user plane (open central unit user plane, O-CU-UP), and the RU may also be referred to as an open radio unit (open radio unit, O-RU). This is not specifically limited in this application. Any unit in the CU, the CU-CP, the CU-UP, the DU, and the RU in this application may be implemented by a software module, a hardware module, or a combination of the software module and the hardware module.

Optionally, for network elements in the ORAN system, each network element may implement a protocol layer function shown in Table 1.

**Table 1**

| ORAN network element | Protocol layer function |
|---|---|
| O-CU-CP | Radio resource control (radio resource control, RRC) and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), media access control (media access control, MAC), and physical layer-high (PHY-high) |
| O-RU | Physical-low (PHY-low) |

It should be noted that, in the ORAN system, the network device in this application may be one or more of the network elements in Table 1.

A specific structure of an execution body of a method provided in embodiments of this application is not specifically limited in embodiments of this application provided that a program that records code for the method provided in embodiments of this application can be run to perform communication according to the method provided in embodiments of this application. For example, the execution body of the method provided in embodiments of this application may be a terminal device, a network device, or a functional module that can invoke and execute a program in a terminal device or a network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk drive, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information.

A specific structure of an execution body of a method provided in embodiments of this application is not specifically limited in embodiments of this application provided that a program that records code for the method provided in embodiments of this application can be run to perform communication according to the method provided in embodiments of this application. For example, the execution body of the method provided in embodiments of this application may be a terminal device, a network device, or a functional module that can invoke and execute a program in a terminal device or a network device.

Before the solutions in embodiments of this application are described, the following points are described.
(1) In embodiments of this application, the "indication" may include a direct indication, an indirect indication, an explicit indication, or an implicit indication. When a piece of indication information is described as indicating A, it may be understood that the indication information carries A, directly indicates A, or indirectly indicates A.

In embodiments of this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information to be sent separately, where sending periodicities and/or sending occasions of these pieces of sub-information may be the same or different.

(2) In embodiments of this application, "sending" and "receiving" represent signal transfer directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.

The following describes technical terms in embodiments of this application.

**Non-terrestrial network (non-terrestrial network,** NTN): for example, satellite communication, features wide coverage, a long communication distance, high reliability, high flexibility, and a high throughput, is not affected by geographical environments, climates, and natural disasters, and has been widely used in the fields of aeronautical communication, maritime communication, military communication, and the like. Introduction of a satellite into a future 5th generation mobile communication new radio technology can provide communication services for areas, such as a sea and a forest, that are difficult to cover by a terrestrial network, can enhance reliability of 5G communication, for example, provide more stable communication services with higher quality for trains, airplanes, and users on such means of transportation, and can further provide more data transmission resources, and support more connections.

**Beam** (beam): may be understood as a spatial filter (spatial filter) or a spatial parameter (spatial parameter). A beam used to send a signal may be referred to as a transmission beam (transmission beam, Tx beam), and may be a spatial domain transmit filter (spatial domain transmit filter) or a spatial transmit parameter (spatial transmit parameter, spatial Tx parameter), or may be a spatial transmit angle (for example, an azimuth Azimuth or a zenith Zenith) or a spatial transmit angle range (for example, an azimuth center angle and an offset, an azimuth uncertainty, an azimuth protection range, a zenith center angle and an offset, a zenith uncertainty, or a zenith protection range). A beam used to receive a signal may be referred to as a reception beam (reception beam, Rx beam), and may be a spatial domain receive filter (spatial domain receive filter) or a spatial receive parameter (spatial receive parameter, spatial Rx parameter), or may be a spatial receive angle (for example, an azimuth (azimuth) or a zenith (zenith)) or a spatial receive angle range (for example, an azimuth center angle and an offset, an azimuth uncertainty, an azimuth protection range, a zenith center angle and an offset, a zenith uncertainty, or a zenith protection range).

A beam forming technology may be a beamforming technology or another technology. For example, the beamforming technology may be specifically a digital beamforming technology, an analog beamforming technology, a hybrid digital/analog beamforming technology, or the like. The transmission beam may refer to signal strength distribution formed in different directions in space after a signal is transmitted through an antenna, and the reception beam may refer to signal strength distribution, in different directions in space, of a radio signal received from an antenna. The beamforming technology in embodiments of this application may be implemented based on a power amplifier of a new material, or may be implemented based on a new antenna architecture, for example, a new hybrid phased-array and lens antenna technology.

In a 5G-NR protocol, the beam may be a spatial filter (spatial filter). However, it should be understood that this application does not exclude a possibility of defining another term in a future protocol to represent a same or similar meaning.

**Antenna panel (antenna panel):** is referred to as a panel (panel) for short. Each antenna panel may be configured with one or more reception beams and one or more transmission beams. Therefore, the antenna panel may also be understood as a beam group. A communication device, for example, a terminal device or a network device, may receive a signal by using a reception beam on an antenna panel, or may transmit a signal by using a transmission beam on the antenna panel.

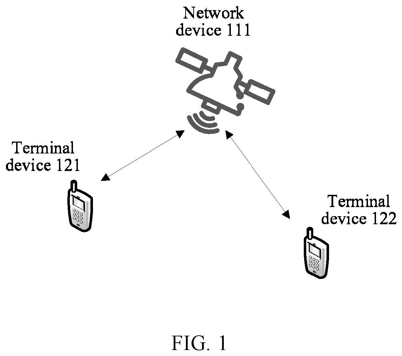

FIG. 1 is a diagram of a system architecture. It should be understood that a scenario in which a method in embodiments of this application can be used may include more or fewer apparatuses or devices, or may include apparatuses or devices having similar functions. The system architecture shown in FIG. 1 includes a network device 111 (which may include one or more network devices), and terminal devices 121 and 122 (which may include one or more terminal devices). Both the network device and the terminal device may have a high-frequency communication capability and a low-frequency communication capability. It should be noted that, in a communication method provided in embodiments of this application, a single network device and a plurality of terminal devices may be used as an example, and the network device may transmit data or control signaling to the terminal devices.

In an NTN communication scenario, due to a long communication distance of a network device and a poor link budget, to meet a high-throughput service like broadband video transmission, a terminal device usually uses a phased-array narrow beam to align with the network device, to improve receive gain. For example, a width of the narrow beam is 1° to 3°. When a vehicle-mounted phased-array terminal device moves at a high speed, bumps on a road surface or a vehicle steering may cause rapid changes in a three-axis attitude, and a phased-array jitter may cause jitter in a beam direction. The jitter commonly occurs. To maintain an accurate direction of the narrow beam, a beam alignment mechanism in the NTN scenario needs to be improved. A satellite is quickly searched for in an initial access phase, and in addition, stable beam tracking is maintained in a data transmission phase. The satellite provides services based on beams, and single-stream transmission is used in a case of a single beam. Therefore, a satellite terminal usually uses a single radio frequency channel to reduce costs. This brings greater difficulty to beam alignment.

In an initial access phase of a terrestrial cellular system, the network device periodically sends a synchronization signal/PBCH block (synchronization signal/PBCH block, SSB) set. The SSB set may include a plurality of SSBs, and each SSB corresponds to a beam direction.

Specifically, the SSB is one of commonly used pilot channels, and may be used by the terminal device to access the network device in many aspects, for example, specific aspects such as cell search, beam measurement, beam selection, and beam recovery.

For example, the sending periodicity of the SSB set may be 5 ms, 10 ms, 20 ms, 40 ms, 80 ms, 160 ms, or the like.

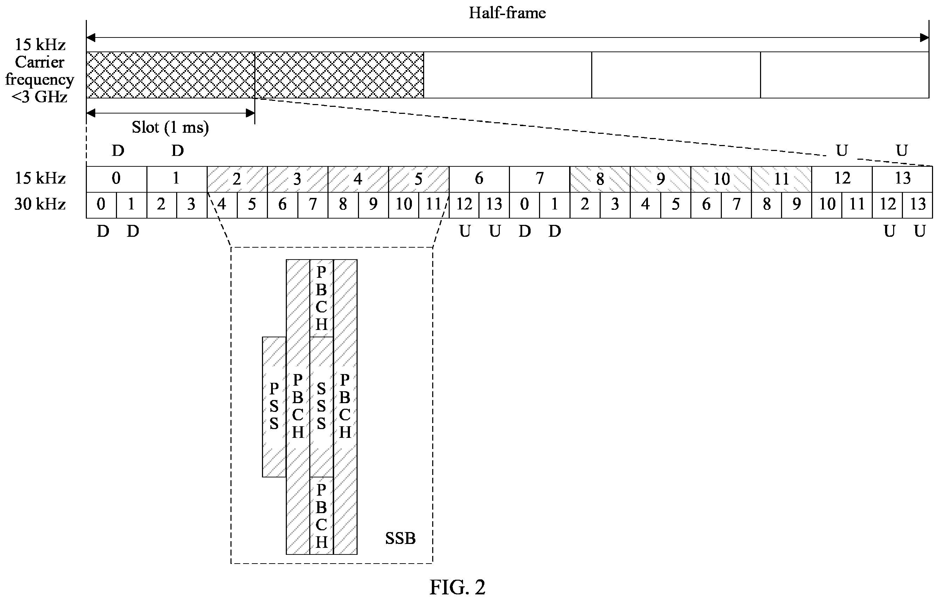

FIG. 2 is a diagram of a pattern of an SSB set.

Refer to FIG. 2. An SSB may occupy four symbols, and further includes a primary synchronization signal (primary synchronization signal, PSS), a secondary synchronization signal (secondary synchronization signal, SSS), and a physical broadcast channel (physical broadcast channel, PBCH). The PSS is located on the 1^{st} symbol of the SSB, to help the terminal device obtain a radio frame boundary. An m-sequence of the PSS may include 127 values, and is mapped to 127 subcarriers. The terminal device may determine, depending on whether the PSS is detected, whether a beam direction of the terminal device is aligned with that of the network device. The SSS may be a combination of an m-sequence. For example, the SSS may include 336 indexes, and the terminal device may parse information in the SSB based on information in the SSS. The PBCH may include system information, and the terminal device may decode the PBCH based on the PSS and the SSS.

Further, the terminal device adjusts a beam direction, and attempts to search for the PSS in the SSB in different directions. The terminal device can detect the PSS and complete access only when a beam used by the network device to send the SSB covers the terminal device, and power of an SSB signal received by a beam of the terminal device is sufficiently high.

Further, one SSB set may exist in a half-frame of 5 ms, and a pattern of the SSB set is related to a frequency band on which a system operates.

Specifically, the pattern of the SSB set shown in FIG. 2 is applicable to a subcarrier spacing of 15 kHz. When a carrier frequency is less than 3 GHz, one SSB set may include four SSBs, occupying first two slots in the half-frame, and each slot includes two SSBs. When the carrier frequency is greater than 3 GHz, one SSB set may include eight SSBs, occupying first four slots in the half-frame, and each slot includes two SSBs.

Still refer to FIG. 2. Patterns of SSBs in all slots are the same. Because first two symbols in one slot need to be reserved for a downlink control channel, and last two symbols need to be reserved for an uplink control channel, no SSB is mapped on symbols 0, 1, 12, and 13 in one slot with a subcarrier spacing of 15 kHz shown in FIG. 2. In addition, for coexistence with a subcarrier spacing of 30 kHz, no SSB is mapped on symbols 6 and 7 in one slot with a subcarrier spacing of 15 kHz, and the symbols 6 and 7 are respectively reserved for an uplink control channel and a downlink control channel with a subcarrier spacing of 30 kHz.

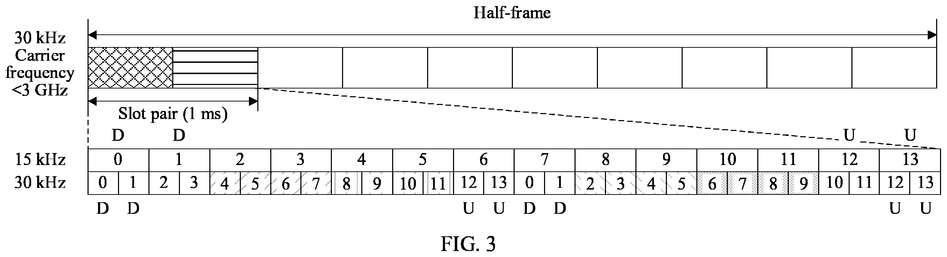

FIG. 3 is a diagram of another pattern of an SSB set.

Specifically, the pattern of the SSB set shown in FIG. 3 is applicable to a subcarrier spacing of 30 kHz. When a carrier frequency is less than 3 GHz, one SSB set may include four SSBs, occupying a 1^{st} slot pair in a half-frame, and one slot pair includes two slots. When the carrier frequency is greater than 3 GHz, one SSB set may include eight SSBs, occupying first two slot pairs in the half-frame.

Still refer to FIG. 3. Patterns of SSBs in all slot pairs are the same. Because first two symbols in one slot need to be reserved for a downlink control channel, and last two symbols need to be reserved for an uplink control channel, no SSB is mapped on symbols 0, 1, 12, and 13 in a 1^{st} slot and a 2^{nd} slot in one slot pair with a subcarrier spacing of 30 kHz shown in FIG. 3.

In a non-terrestrial network scenario, a network device and a terminal device need to perform beam alignment for subsequent data transmission. During beam alignment, the terminal device may periodically adjust a beam direction during initial access, and continuously change a reception beam direction of the terminal device to attempt to search for an SSB. When the network device needs to perform sweeping across a large quantity of transmission beam directions, and a phased-array terminal has a large quantity of selectable reception beam directions, for example, up to hundreds of beam directions, the terminal device needs to complete beam sweeping in a large quantity of directions, to implement alignment with a satellite. Especially in a scenario in which both a low-earth-orbit satellite and a vehicle-mounted terminal move at a high speed, an initial access process becomes more time-consuming and even fails.

In view of the foregoing problem, embodiments of this application provide a communication method and apparatus, to reduce the time required for a terminal device during initial access.

The following describes technical solutions in embodiments of this application with reference to accompanying drawings.

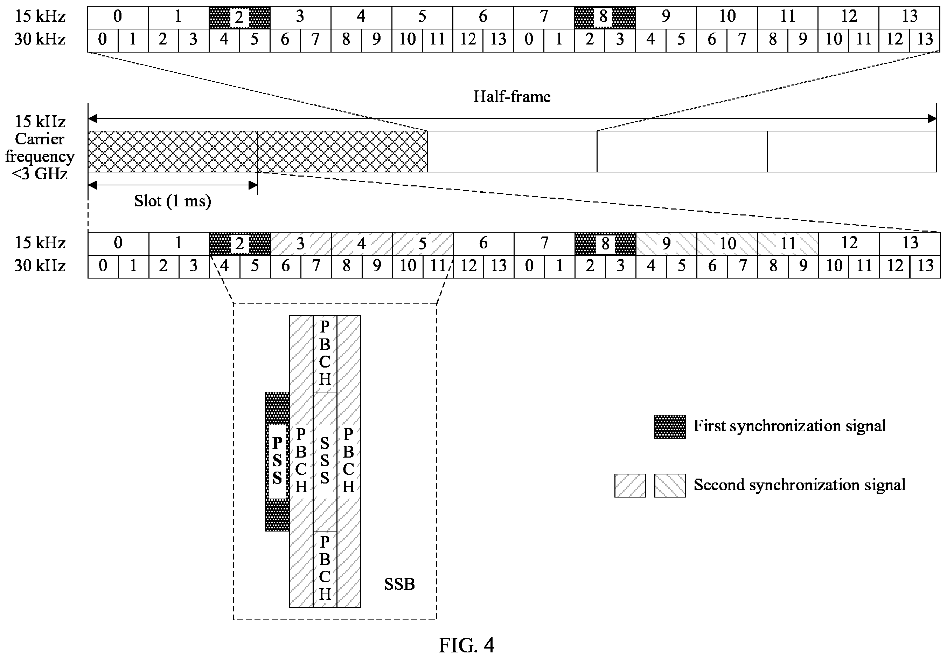

FIG. 4 is a diagram of a design of a broadcast signal according to an embodiment of this application.

Specifically, in the diagram of the design of the broadcast signal shown in FIG. 4, a scenario in which a subcarrier spacing is 15 kHz is used as an example. A second synchronization signal may be in a second signal set, and the second signal set may include four second synchronization signals, occupying first two slots in one half-frame. A first synchronization signal may be in a first signal set, and the first signal set may include a plurality of slots shown in FIG. 4 that include the first synchronization signal.

In a possible implementation, a network device sends a first synchronization signal; and the network device sends a second synchronization signal, where a width of a transmission beam for the first synchronization signal is greater than a width of a transmission beam for the second synchronization signal, and a coverage area of the transmission beam for the first synchronization signal includes coverage areas of transmission beams for a plurality of second synchronization signals. Correspondingly, a terminal device receives the first synchronization signal; and the terminal device receives the second synchronization signal, where the width of the transmission beam for the first synchronization signal is greater than the width of the transmission beam for the second synchronization signal, and the coverage area of the transmission beam for the first synchronization signal includes coverage areas of transmission beams for a plurality of second synchronization signals.

It should be understood that because the width of the transmission beam for the first synchronization signal is greater than the width of the transmission beam for the second synchronization signal, and the coverage area of the transmission beam for the first synchronization signal includes coverage areas of transmission beams for a plurality of second synchronization signals, in embodiments of this application, the first synchronization signal may also be referred to as a wide-beam synchronization signal, a wide-beam signal, or a wide beam, and the second synchronization signal may also be referred to as a narrow-beam synchronization signal, a narrow-beam signal, or a narrow beam. The names are not limited in embodiments of this application.

Specifically, for a pattern design of the first synchronization signal and the second synchronization signal, refer to FIG. 4. In FIG. 4, the first synchronization signal is located on a symbol 2 and a symbol 8 in one slot, and the network device sends the first synchronization signal on the symbol 2 and the symbol 8 by using a wide beam. In FIG. 4, the second synchronization signal is located on symbols 3 to 5 and symbols 9 to 11 in the slot, and the network device sends the second synchronization signal on the symbols 3 to 5 and the symbols 9 to 11 by using a narrow beam. In other words, the width of the transmission beam for the first synchronization signal is greater than the width of the transmission beam for the second synchronization signal, and the coverage area of the transmission beam for the first synchronization signal includes coverage areas of transmission beams for a plurality of second synchronization signals.

It should be understood that specific positions of the first synchronization signal and the second synchronization signal in this embodiment of this application are merely used as an example. This is not limited in embodiments of this application.

In this embodiment of this application, the terminal device receives the first synchronization signal and the second synchronization signal that are sent by the network device, where the width of the transmission beam for the first synchronization signal is greater than the width of the transmission beam for the second synchronization signal, and the coverage area of the transmission beam for the first synchronization signal includes coverage areas of transmission beams for a plurality of second synchronization signals, so that within a period of time, a quantity of first synchronization signals that cover the terminal device is greater than a quantity of second synchronization signals that cover the terminal device. Therefore, when the terminal device adjusts a reception beam direction to attempt to receive a synchronization signal from the network device, in comparison with directly searching for the second synchronization signal, the terminal device can more quickly find the first synchronization signal, so that a reception beam of the terminal device can be more quickly aligned with the network device, reducing time required for the terminal device during initial access.

In this embodiment of this application, the first synchronization signal is transmitted by using a beam wider than that for the second synchronization signal, so that a coverage area on the ground of the transmission beam for the first synchronization signal can be increased, to reduce time during which the transmission beam cannot cover a location of the terminal device due to beam hopping, and prevent the terminal device from failing to accurately point to the network device and failing to receive a downlink signal sent by the network device due to excessively long time without a beam service.

In a possible implementation, the first synchronization signal includes a synchronization signal generated based on a physical cell identifier (physical cell identifier, PCI) or a part of the PCI, and the second synchronization signal includes a synchronization signal generated based on the PCI or a part of the PCI.

For example, a calculation formula of the PCI is as follows: ${N}_{ID}^{cell} = 3 \times {N}_{ID}^{\left(1\right)} + {N}_{ID}^{\left(2\right)}$${N}_{ID}^{\left(2\right)} ∈ \left\{0, 1, 2\right\}$, which is carried in a PSS. The PSS is an m-sequence having a length of 127, and a generation formula of the sequence is: ${d}_{PSS} \left(n\right) = 1 - 2 x \left(m\right)$ $m = \left[n+43{N}_{ID}^{\left(2\right)}\right] mod 127$ $0 \leq n < 127$ $x \left(i+7\right) = \left[x\left(i+4\right)+x\left(i\right)\right] mod 2$ $\left[x\left(6\right) x\left(5\right) x\left(4\right) x\left(3\right) x\left(2\right) x\left(1\right) x\left(0\right)\right] = \left[1 1 1 0 1 1 0\right]$${N}_{ID}^{\left(2\right)} ∈ \left\{0,1,…,335\right\}$, which is carried in an SSS. The SSS is a gold sequence having a length of 127, and a generation formula of the sequence is: ${d}_{SSS} \left(n\right) = \left\{1-2{x}_{0}\left[\left(n+{m}_{0}\right)mod127\right]\right\} \left\{1-2{x}_{1}\left[\left(n+{m}_{1}\right)mod127\right]\right\}$ ${m}_{0} = 15 \left⌊\frac{{N}_{ID}^{\left(1\right)}}{112}\right⌋ + 5 {N}_{ID}^{\left(2\right)}$ ${m}_{1} = {N}_{ID}^{\left(1\right)} mod 112$ $0 \leq n < 127$ ${x}_{0} \left(i+7\right) = \left[{x}_{0}\left(i+4\right)+{x}_{0}\left(i\right)\right] mod 2$ ${x}_{1} \left(i+7\right) = \left[{x}_{1}\left(i+1\right)+{x}_{1}\left(i\right)\right] mod 2$ $\left[{x}_{0}\left(6\right) {x}_{0}\left(5\right) {x}_{0}\left(4\right) {x}_{0}\left(3\right) {x}_{0}\left(2\right) {x}_{0}\left(1\right) {x}_{0}\left(0\right)\right] = \left[0 0 0 0 0 0 1\right]$ $\left[{x}_{1}\left(6\right) {x}_{1}\left(5\right) {x}_{1}\left(4\right) {x}_{1}\left(3\right) {x}_{1}\left(2\right) {x}_{1}\left(1\right) {x}_{1}\left(0\right)\right] = \left[0 0 0 0 0 0 1\right]$

It should be understood that the first synchronization signal may alternatively be a signal in another form that has a same function as the PSS, and the second synchronization signal may alternatively be a signal in another form that has a same function as the SSS and a PBCH. This is not limited in embodiments of this application.

In a possible implementation, the first synchronization signal includes a PSS, and the second synchronization signal includes an SSS.

It should be understood that when the first synchronization signal is the PSS, the first synchronization signal may also be referred to as a wide-beam PSS. When the second synchronization signal includes the SSS, the SSS may be referred to as a narrow-beam SSS. Specific names are not limited in this application.

Specifically, still refer to FIG. 4. The second synchronization signal may be on a symbol 1 to a symbol 3 in an SSB, that is, symbols other than the 0^{th} symbol in the SSB.

It should be understood that a structure of the SSB shown in FIG. 4 is merely used as an example. Specific structures and time domain positions of the first synchronization signal and the second synchronization signal are not specifically limited in embodiments of this application.

It should be further understood that signal content of the SSB shown in FIG. 4 is merely used as an example. The first synchronization signal and the second synchronization signal are two synchronization signals that are used for beam alignment and do not overlap in time domain. Content of the first synchronization signal and the second synchronization signal is not specifically limited in embodiments of this application.

In a possible implementation, a quantity of first synchronization signals is greater than or equal to a quantity of second synchronization signals within a first duration.

Specifically, the first synchronization signal may be in a first signal set, and the first signal set may be continuously sent. The second synchronization signal may be in a second signal set, and the second signal set may be sent periodically. Because the first synchronization signal is sent by using a wide beam and the second synchronization signal is sent by using a narrow beam, within a period of time, a quantity of transmission beams for first synchronization signals that cover the terminal device is greater than a quantity of transmission beams for second synchronization signals that cover the terminal device.

Optionally, a sending periodicity of the first signal set may be the same as a time domain length of the first signal set. For example, when the first signal set includes five slots, the sending periodicity of the first signal set is five slots, that is, the sending periodicity of the first signal set is 5 ms, or the first signal set is sent regularly.

Optionally, the sending periodicity of the first signal set may be greater than the time domain length of the first signal set, and less than or equal to a sending periodicity of the second signal set. For example, the first signal set includes five slots, and the sending periodicity of the second signal set is 20 ms. In this case, the sending periodicity of the first signal set may alternatively be 10 slots, that is, the sending periodicity of the first signal set is 10 ms.

It should be understood that, in this embodiment of this application, the quantity of first synchronization signals is greater than or equal to the quantity of second synchronization signals within the first duration, but the sending periodicity of the first signal set is not directly associated with the sending periodicity of the second signal set.

It should be understood that the first signal set including five slots is merely used as an example. The first signal set may alternatively include one slot, two slots, 10 slots, or the like. This is not limited in this application.

Further, still refer to FIG. 4. In the scenario in which the subcarrier spacing is 15 kHz, in one slot in the first signal set, a time domain position of the first synchronization signal is the symbol 2 and the symbol 8. When a second synchronization signal in a second signal set sent by the network device is adjacent to a first synchronization signal in a first signal set sent by the network device in time domain, that is, when the second synchronization signal is sent after the first synchronization signal, the network device sends the first synchronization signal in the first signal set on the symbol 2 and the symbol 8, and sends 2^{nd} to 4^{th} symbols in the SSB shown in FIG. 4 on the symbol 3 to the symbol 5 and the symbol 9 to the symbol 11 in a narrow beam direction corresponding to a wide beam direction of the first synchronization signal, where the 2^{nd} to 4^{th} symbols include a PBCH and an SSS.

Further, in the scenario in which the subcarrier spacing is 15 kHz shown in FIG. 4, in one slot in the first signal set, the time domain position of the first synchronization signal is the symbol 2 and the symbol 8. Because the quantity of second synchronization signals may be less than the quantity of first synchronization signals within the first duration, when the first signal set and the second signal set that are sent by the network device do not overlap in the time domain, the network device only sends the first synchronization signal on the symbol 2 and the symbol 8, and does not need to correspondingly send the second synchronization signal on the symbol 3 to the symbol 5 and the symbol 9 to the symbol 11.

In a possible implementation, the second synchronization signal is after the first synchronization signal, and the second synchronization signal is adjacent to the first synchronization signal in time domain.

Specifically, one first signal set in FIG. 4 may include a plurality of slots, and a position of a first synchronization signal in one slot in the first signal set is adjacent, in time domain, to a position of a second synchronization signal in one slot in the second signal set that is sent in association.

For example, still refer to FIG. 4. In the first signal set, the position of the first synchronization signal in the first signal set is adjacent to a time domain position of the second synchronization signal in the second signal set. In FIG. 4, in a 1^{st} slot, the position of the first synchronization signal in the first signal set is the symbol 2 and the symbol 8, and the position of the second synchronization signal in the second synchronization signal set is the symbol 3 to the symbol 5 and the symbol 9 to the symbol 11. The positions are adjacent in time domain.

In this embodiment of this application, the second synchronization signal is adjacent to the corresponding first synchronization signal in time domain, so that the terminal device can immediately perform detection on the second synchronization signal after detecting the first synchronization signal. In other words, the terminal device can perform detection on the second synchronization signal in adjacent and determined time domain, reducing system overheads of the terminal device.

In a possible implementation, the second synchronization signal has a same frequency domain center point as the first synchronization signal.

Specifically, refer to FIG. 4. The first synchronization signal in FIG. 4 may be a PSS. A frequency domain center point of the PSS is aligned with a frequency domain center point of a synchronization signal in each symbol in the second synchronization signal. For example, the PSS is aligned with frequency domain center points of frequency bands occupied by PBCHs in the symbol 1 and the symbol 3, or the PSS is aligned with a frequency domain center point of a frequency band occupied by an SSS in the symbol 2.

In this embodiment of this application, after detecting the first synchronization signal, the terminal device may perform detection on the second synchronization signal in a frequency band with the same frequency domain center point. Therefore, detection overheads of the terminal device are reduced.

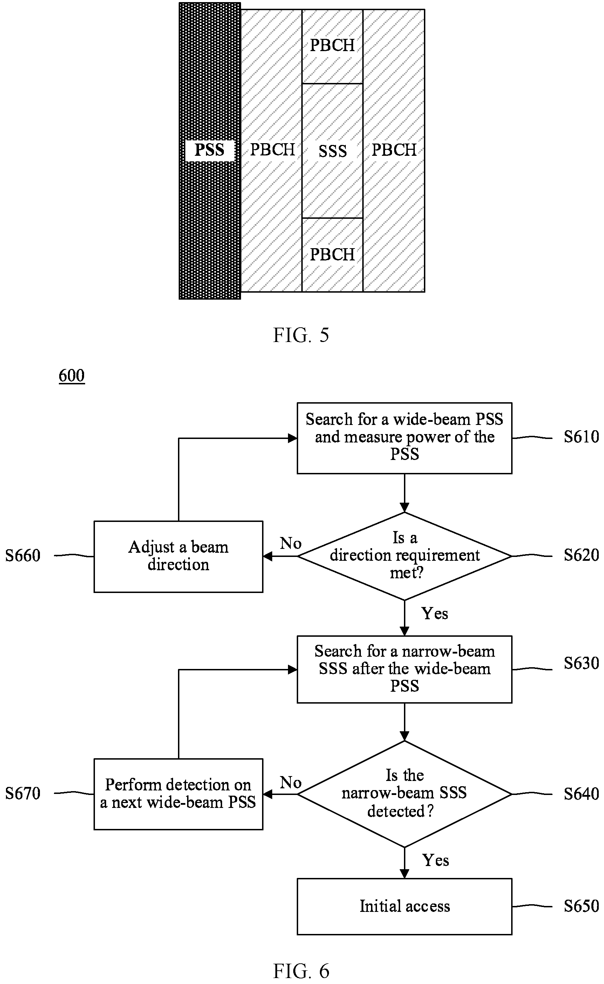

FIG. 5 is a diagram of a structure of a broadcast signal according to an embodiment of this application.

In a possible implementation, a sequence length of the PSS is greater than a sequence length of the SSS.

Specifically, because the first synchronization signal is sent by using a wide beam, and the wide beam causes a loss of beam gain, the network device may use a longer sequence, to enhance beam alignment performance.

Refer to FIG. 4 and FIG. 5. The structure of the broadcast signal shown in FIG. 5 may be used in a frame structure of the design of the broadcast signal shown in FIG. 4. A sequence of the first synchronization signal shown in FIG. 4 may be an m-sequence, where a length of the m-sequence is 2*^{N}* - 1. The structure of the broadcast signal in FIG. 4 may be replaced with the structure of the broadcast signal shown in FIG. 5. In other words, a longer sequence length may be used for the sequence of the first synchronization signal in FIG. 4. For example, a sequence length of the first synchronization signal is greater than 127.

For example, an m-sequence having a length of 255 may be used for a sequence of the PSS in FIG. 4 and FIG. 5.

In this embodiment of this application, because a beam width of the PSS is greater than a beam width of the SSS, and a wide beam causes a loss of beam gain, the network device sends the PSS by using a sequence longer than that of the SSS, so that the terminal device can obtain a higher detection peak when detecting the PSS, and accuracy of determining, by the terminal device, that the PSS is received is improved, enhancing beam alignment performance between the terminal device and the network device, and compensating for the loss of the beam gain caused by the wide beam.

In a possible implementation, the network device repeatedly sends the first synchronization signal on a plurality of frequency bands.

Specifically, because a broadcast signal used for beam alignment, that is, the wide-beam PSS, is sent by using a wide beam, and the wide beam causes a loss of beam gain, the network device may repeatedly send the first synchronization signal on the plurality of frequency bands, to enhance beam alignment performance.

For example, still refer to FIG. 4. The network device may send the first synchronization signal on a plurality of frequency bands at positions of the symbol 2 and the symbol 8 in a slot by using the wide beam. Correspondingly, the terminal device may search for the first synchronization signal on the plurality of frequency bands, so that the terminal device can receive more first synchronization signals within a specific time period.

Further, the first synchronization signal repeatedly sent by the network device in a plurality of frequency bands may be a same sequence, or may be different sequences that carry same information.

For example, still refer to FIG. 4. The network device may send the first synchronization signal on a plurality of frequency bands at positions of the symbol 2 and the symbol 8 in a slot by using the wide beam. Alternatively, the network device may send a PSS 1 on one of the frequency bands, and the network device sends a PSS 2 on another one of the frequency bands. Both the PSS 1 and the PSS 2 use same ${N}_{ID}^{\left(2\right)}$, but specific sequence forms may be different.

In this embodiment of this application, because a beam width of the first synchronization signal is greater than a beam width of the second synchronization signal, and a wide beam causes a loss of beam gain, the network device repeatedly sends the first synchronization signal on the plurality of frequency bands, so that the terminal device can receive more first synchronization signals within a period of time, increasing an opportunity for the terminal device to receive a first synchronization signal whose power meets a requirement, and reducing time required for the terminal device during initial access.

In a possible implementation, the network device repeatedly sends the first synchronization signal in time domain.

Specifically, because a broadcast signal used for beam alignment, that is, the wide-beam PSS, is sent by using a wide beam, and the wide beam causes a loss of beam gain, the network device may repeatedly send the first synchronization signal in time domain, to enhance beam alignment performance.

For example, still refer to FIG. 4. The network device may repeatedly send the first synchronization signal at positions of the symbol 2 and the symbol 3 in a slot by using the wide beam. Adaptively, the network device may send the second synchronization signal on a symbol 4 to a symbol 6, so that more wide-beam first synchronization signals can cover the terminal device within a specific time period.

Further, the first synchronization signal repeatedly sent by the network device in time domain may be a same sequence, or may be different sequences that carry same information.

For example, still refer to FIG. 4. The network device may repeatedly send the first synchronization signal at positions of the symbol 2 and the symbol 3 in a slot by using the wide beam. The network device sends a PSS 1 on the symbol 2, and the network device sends a PSS 2 on the symbol 3. Both the PSS 1 and the PSS 2 use same ${N}_{ID}^{\left(2\right)}$, but specific sequence forms may be different.

In this embodiment of this application, because a beam width of the first synchronization signal is greater than a beam width of the second synchronization signal, and a wide beam causes a loss of beam gain, the network device repeatedly sends the first synchronization signal in time domain, so that there can be more wide-beam first synchronization signals for covering the terminal device within a specific time period, increasing an opportunity for the terminal device to receive a first synchronization signal whose power meets a requirement, and reducing time required for the terminal device during initial access.

FIG. 6 is a flowchart of an initial access procedure 600 of a terminal device according to an embodiment of this application.

It should be understood that, in the initial access procedure of the terminal device shown in FIG. 6, an example in which a pattern of a synchronization signal block is shown in FIG. 4 is used, that is, a first synchronization signal is a wide-beam PSS, and a second synchronization signal is a symbol 1 to a symbol 3 in a narrow-beam SSB. A PSS and an SSS in FIG. 6 may alternatively be other synchronization signals generated based on a PCI or a part of the PCI. This is not specifically limited in this application.

S610: The terminal device selects an optional beam direction to search for a wide-beam PSS. After the terminal device detects the wide-beam PSS, the terminal device measures power of the PSS, and the terminal device performs S620.

For example, the terminal device adjusts one reception beam direction every 0.5 ms, and attempts to perform detection on the wide-beam PSS.

S620: The terminal device determines whether the detected wide-beam PSS meets a direction requirement.

Specifically, when the power of the wide-beam PSS detected by the terminal device is greater than or equal to a threshold, the terminal device performs S630; or when the power of the wide-beam PSS detected by the terminal device is less than the threshold, the terminal device performs S660.

Optionally, when the power of the wide-beam PSS detected by the terminal device is greater than or equal to -100 dBm, the terminal device searches for a narrow-beam SSS after the wide-beam PSS. When the power of the PSS detected by the terminal device is less than -100 dBm, the terminal device adjusts a beam direction, and continues to search for the wide-beam PSS.

Optionally, the terminal device selects a beam direction with maximum received power from all reception beams to search for the SSS.

S660: When the wide-beam PSS detected by the terminal device does not meet the direction requirement, the terminal device adjusts the beam direction, and returns to perform S610.

S630: In a possible implementation, the terminal device receives the second synchronization signal, including: receiving the second synchronization signal based on the first synchronization signal received by the terminal device.

In a possible implementation, receiving the second synchronization signal based on the first synchronization signal received by the terminal device includes: receiving the second synchronization signal based on a reception beam direction of the first synchronization signal or a reception beam codebook of the first synchronization signal.

In a possible implementation, the terminal device may alternatively receive the second synchronization signal based on a time-frequency resource of the first synchronization signal or ${N}_{ID}^{\left(2\right)}$ in the first synchronization signal.

For example, as shown in FIG. 6, after the terminal device detects a wide-beam PSS that meets the direction requirement, the terminal device searches for the narrow-beam SSS by using a beam that is in a same reception beam direction as the wide-beam PSS.

In this embodiment of this application, the terminal device receives the second synchronization signal based on the received first synchronization signal, where a width of a transmission beam for the first synchronization signal is greater than a width of a transmission beam for the second synchronization signal, and a coverage area of the transmission beam for the first synchronization signal includes coverage areas of transmission beams for a plurality of second synchronization signals, so that within a period of time, a quantity of first synchronization signals that cover the terminal device is greater than a quantity of second synchronization signals that cover the terminal device. Therefore, in comparison with directly receiving the second synchronization signal, the terminal device can be more quickly aligned with a network device, so that the terminal performs detection on the second synchronization signal based on alignment with the network device, reducing time required for the terminal device during initial access.

In a possible implementation, the terminal device performs detection on the SSS on the 2^{nd} symbol after the detected wide-beam PSS.

Specifically, refer to FIG. 4. The terminal device performs detection on the SSS on 2^{nd} symbols, that is, a symbol 4 and a symbol 10, after the detected wide-beam PSS that meets the direction requirement. Because a quantity of second synchronization signals that can be received by the terminal device within a time period is less than a quantity of first synchronization signals that can be received by the terminal device within the time period, the SSS may exist on the 2^{nd} symbol after any wide-beam PSS. For a determining procedure of the terminal device, refer to S640.

S640: The terminal device determines whether the 2^{nd} symbol after the detected wide-beam PSS that meets the direction requirement includes the SSS. If the terminal device detects the SSS, the terminal device performs S650, that is, performs initial access; or if the terminal device does not detect the SSS, the terminal device performs S670.

Specifically, the SSS may exist after any wide-beam PSS, and detection on the SSS requires blind detection on indexes. For example, there may be 336 indexes of an SSS in a second signal, and the terminal device needs to determine, through blind detection, whether a signal detected on the 2^{nd} symbol after the detected wide-beam PSS corresponds to one of the 336 indexes.

S670: The terminal device keeps a reception beam direction unchanged, and attempts to perform detection on a next wide-beam PSS. After detecting a next wide-beam PSS that meets the direction requirement, the terminal device returns to perform S630, that is, the terminal device performs detection on the SSS on the 2^{nd} symbol after the next detected wide-beam PSS that meets the direction requirement.

S650: The terminal device parses the second synchronization signal based on the detected PSS and SSS, and performs initial access.

Specifically, the terminal device calculates *N_{ID}* based on ${N}_{ID}^{\left(2\right)}$ and ${N}_{ID}^{\left(1\right)}$ in the detected PSS and SSS, parses a PBCH in the second synchronization signal to obtain a PBCH payload and a MIB, and further parses a SIB message. The terminal device completes initial access based on a MIB message and the SIB message.

In a possible implementation, in the initial access process shown in FIG. 6, the terminal device performs beam sweeping, searches for the wide-beam PSS in different beam directions, and performs detection on the power of the wide-beam PSS. When the power of the detected wide-beam PSS meets an access requirement, that is, when a beam direction meets the direction requirement, the terminal device searches, after the wide-beam PSS, for the narrow-beam SSS sent by the network device. If the terminal device cannot find, in a beam direction, the wide-beam PSS whose power meets the access requirement, it indicates that the beam direction currently selected by the terminal device does not meet the direction requirement. The terminal device continues to adjust the beam direction, and the terminal device continues to attempt to search for the wide-beam PSS in an adjusted beam direction.

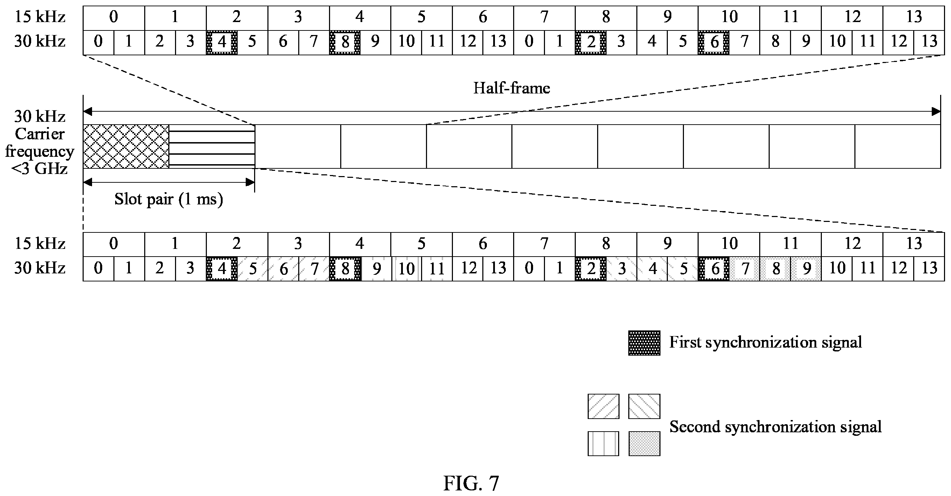

FIG. 7 is a diagram of another design of a broadcast signal according to an embodiment of this application.

Specifically, in the diagram of the design of the broadcast signal shown in FIG. 7, a scenario in which a subcarrier spacing is 30 kHz is used as an example. A second synchronization signal may be in a second signal set, and the second signal set may include four second synchronization signals, occupying a 1^{st} slot pair in one half-frame. A first synchronization signal may be in a first signal set, and the first signal set may include a plurality of slot pairs shown in FIG. 7 that include the first synchronization signal.

Specifically, in the scenario in which the subcarrier spacing is 30 kHz, in one slot pair in the first signal set, a time domain position of the first synchronization signal is a symbol 4 and a symbol 8 in a 1^{st} slot in the slot pair and a symbol 2 and a symbol 6 in a 2^{nd} slot in the slot pair. When a second synchronization signal in a second signal set sent by a network device is adjacent to a first synchronization signal in a first signal set sent by the network device in time domain, that is, when the second synchronization signal is sent after the first synchronization signal, the network device sends the first synchronization signal in the first signal set on the symbol 4 and the symbol 8 in the 1^{st} slot and the symbol 2 and the symbol 6 in the 2^{nd} slot, and sends the second synchronization signal in the second signal set on a symbol 5 to a symbol 7 and a symbol 9 to a symbol 11 in the 1^{st} slot and a symbol 3 to a symbol 5 and a symbol 7 to a symbol 9 in the 2^{nd} slot in a narrow beam direction corresponding to a wide beam direction of the first synchronization signal, where the second synchronization signal includes a PBCH and an SSS.

Further, in the scenario in which the subcarrier spacing is 30 kHz shown in FIG. 7, in one slot pair in the first signal set, the time domain position of the first synchronization signal is a symbol 4 and a symbol 8 in a 1^{st} slot in the slot pair and a symbol 2 and a symbol 6 in a 2^{nd} slot in the slot pair. In this embodiment of this application, because within a period of time, a quantity of first synchronization signals that cover a terminal device is greater than a quantity of second synchronization signals that cover the terminal device, when the slot pair including the first synchronization signal and a slot pair including the second synchronization signal that are sent by the network device do not overlap in the time domain, the network device only sends the first synchronization signal on the symbol 4 and the symbol 8 in the 1^{st} slot and the symbol 2 and the symbol 6 in the 2^{nd} slot in the slot pair, and does not need to send the second synchronization signal on a symbol 5 to a symbol 7 and a symbol 9 to a symbol 11 in the 1^{st} slot and a symbol 3 to a symbol 5 and a symbol 7 to a symbol 9 in the 2^{nd} slot.

It should be understood that, in the diagram of the design of the broadcast signal shown in FIG. 7, the scenario in which the subcarrier spacing is 30 kHz is used as an example. A difference between the scenario in which the subcarrier spacing is 30 kHz and a scenario in which the subcarrier spacing is 15 kHz mainly lies in a specific pattern structure. Characteristics of signal sending by the network device when the subcarrier spacing is 30 kHz may be the same as those when the subcarrier spacing is 15 kHz. For example, a width of a transmission beam for the first synchronization signal sent by the network device is greater than a width of a transmission beam for the second synchronization signal. Details are not described herein again in this embodiment of this application.

It should be further understood that characteristics of signal detection by the terminal device when the subcarrier spacing is 30 kHz may be the same as those when the subcarrier spacing is 15 kHz. For example, the terminal device may receive the second synchronization signal based on the first synchronization signal. For an initial access procedure of the terminal device when the subcarrier spacing is 15 kHz, refer to the foregoing procedure 600. Details are not described herein again in this embodiment of this application.

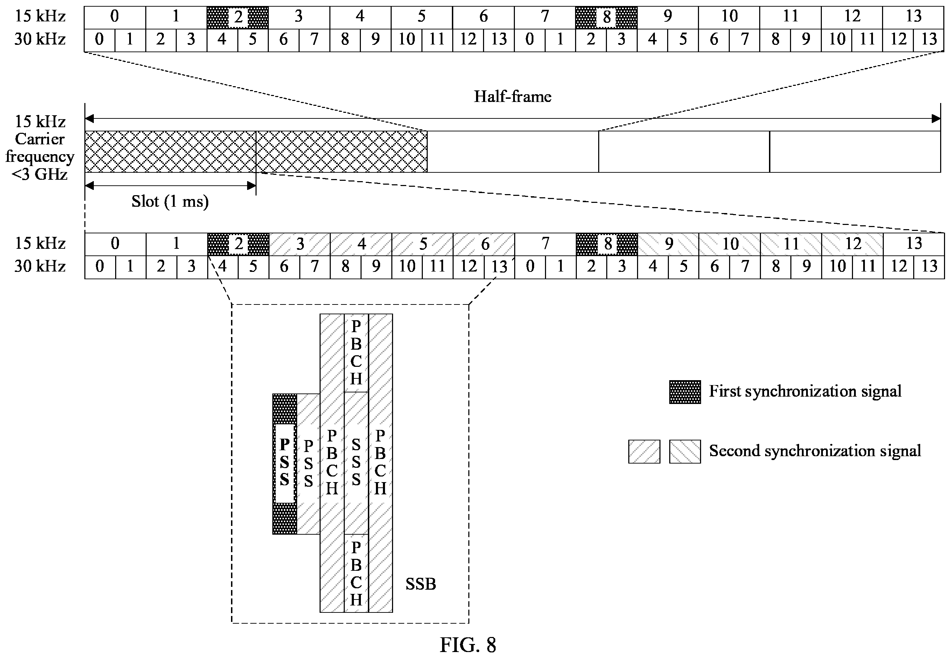

FIG. 8 is a diagram of still another design of a broadcast signal according to an embodiment of this application.

Specifically, in the diagram of the design of the broadcast signal shown in FIG. 8, a scenario in which a subcarrier spacing is 15 kHz is used as an example. A second synchronization signal may be in a second signal set, and the second signal set may include four second synchronization signals, occupying first two slots in one half-frame. A first synchronization signal may be in a first signal set, and the first signal set may include a plurality of slots shown in FIG. 4 that include the first synchronization signal.

In a possible implementation, a network device sends a first synchronization signal; and the network device sends a second synchronization signal, where a width of a transmission beam for the first synchronization signal is greater than a width of a transmission beam for the second synchronization signal, and a coverage area of the transmission beam for the first synchronization signal includes coverage areas of transmission beams for a plurality of second synchronization signals. Correspondingly, a terminal device receives the first synchronization signal; and the terminal device receives the second synchronization signal, where the width of the transmission beam for the first synchronization signal is greater than the width of the transmission beam for the second synchronization signal, and the coverage area of the transmission beam for the first synchronization signal includes coverage areas of transmission beams for a plurality of second synchronization signals.

It should be understood that because the width of the transmission beam for the first synchronization signal is greater than the width of the transmission beam for the second synchronization signal, and the coverage area of the transmission beam for the first synchronization signal includes coverage areas of transmission beams for a plurality of second synchronization signals, in embodiments of this application, the first synchronization signal may also be referred to as a wide-beam synchronization signal, a wide-beam signal, or a wide beam, and the second synchronization signal may also be referred to as a narrow-beam synchronization signal, a narrow-beam signal, or a narrow beam. The names are not limited in embodiments of this application.

Specifically, for a pattern design of the first synchronization signal and the second synchronization signal, refer to FIG. 8. In FIG. 8, the first synchronization signal is located on a symbol 2 and a symbol 8 in one slot, and the network device sends the first synchronization signal on the symbol 2 and the symbol 8 by using a wide beam. In FIG. 8, the second synchronization signal is located on symbols 3 to 6 and symbols 9 to 12 in the slot, and the network device sends the second synchronization signal on the symbols 3 to 6 and the symbols 9 to 12 by using a narrow beam. In other words, the width of the transmission beam for the first synchronization signal is greater than the width of the transmission beam for the second synchronization signal, and the coverage area of the transmission beam for the first synchronization signal includes coverage areas of transmission beams for a plurality of second synchronization signals.

It should be understood that specific positions of the first synchronization signal and the second synchronization signal in this embodiment of this application are merely used as an example. This is not limited in embodiments of this application.

In this embodiment of this application, the terminal device receives the first synchronization signal and the second synchronization signal that are sent by the network device, where the width of the transmission beam for the first synchronization signal is greater than the width of the transmission beam for the second synchronization signal, and the coverage area of the transmission beam for the first synchronization signal includes coverage areas of transmission beams for a plurality of second synchronization signals, so that within a period of time, a quantity of first synchronization signals that cover the terminal device is greater than a quantity of second synchronization signals that cover the terminal device. Therefore, when the terminal device adjusts a reception beam direction to attempt to receive a synchronization signal from the network device, in comparison with directly searching for the second synchronization signal, the terminal device can more quickly find the first synchronization signal, so that a reception beam of the terminal device can be more quickly aligned with the network device, reducing time required for the terminal device during initial access.

In this embodiment of this application, the first synchronization signal is transmitted by using a beam wider than that for the second synchronization signal, so that a coverage area on the ground of a beam for the first synchronization signal can be increased, to reduce time during which a beam sent by the network device cannot cover a location of the terminal device, and prevent the terminal device from failing to accurately point to the network device and failing to receive a downlink signal sent by the network device due to excessively long time without a beam service.

In a possible implementation, the first synchronization signal includes a synchronization signal generated based on a physical cell identifier PCI or a part of the PCI, and the second synchronization signal includes a synchronization signal generated based on the PCI or a part of the PCI.

For example, a calculation formula of the PCI is as follows: ${N}_{ID}^{cell} = 3 \times {N}_{ID}^{\left(1\right)} + {N}_{ID}^{\left(2\right)}$${N}_{ID}^{\left(2\right)} ∈ \left\{0, 1, 2\right\}$, which is carried in a PSS. The PSS is an m-sequence having a length of 127, and a generation formula of the sequence is: ${d}_{PSS} \left(n\right) = 1 - 2 x \left(m\right)$ $m = \left[n+43{N}_{ID}^{\left(2\right)}\right] mod 127$ $0 \leq n < 127$ $x \left(i+7\right) = \left[x\left(i+4\right)+x\left(i\right)\right] mod 2$ $\left[x\left(6\right) x\left(5\right) x\left(4\right) x\left(3\right) x\left(2\right) x\left(1\right) x\left(0\right)\right] = \left[1 1 1 0 1 1 0\right]$${N}_{ID}^{\left(2\right)} ∈ \left\{0,1,…,335\right\}$, which is carried in an SSS. The SSS is a gold sequence having a length of 127, and a generation formula of the sequence is: ${d}_{SSS} \left(n\right) = \left\{1-2{x}_{0}\left[\left(n+{m}_{0}\right)mod127\right]\right\} \left\{1-2{x}_{1}\left[\left(n+{m}_{1}\right)mod127\right]\right\}$ ${m}_{0} = 15 \left⌊\frac{{N}_{ID}^{\left(1\right)}}{112}\right⌋ + 5 {N}_{ID}^{\left(2\right)}$ ${m}_{1} = {N}_{ID}^{\left(1\right)} mod 112$ $0 \leq n < 127$ ${x}_{0} \left(i+7\right) = \left[{x}_{0}\left(i+4\right)+{x}_{0}\left(i\right)\right] mod 2$ ${x}_{1} \left(i+7\right) = \left[{x}_{1}\left(i+1\right)+{x}_{1}\left(i\right)\right] mod 2$ $\left[{x}_{0}\left(6\right) {x}_{0}\left(5\right) {x}_{0}\left(4\right) {x}_{0}\left(3\right) {x}_{0}\left(2\right) {x}_{0}\left(1\right) {x}_{0}\left(0\right)\right] = \left[0 0 0 0 0 0 1\right]$ $\left[{x}_{1}\left(6\right) {x}_{1}\left(5\right) {x}_{1}\left(4\right) {x}_{1}\left(3\right) {x}_{1}\left(2\right) {x}_{1}\left(1\right) {x}_{1}\left(0\right)\right] = \left[0 0 0 0 0 0 1\right]$

It should be understood that the first synchronization signal may alternatively be a signal in another form that has a same function as the PSS, and the second synchronization signal may alternatively be a signal in another form that has a same function as an SSB. This is not limited in embodiments of this application.

In a possible implementation, the first synchronization signal includes a first primary synchronization signal, and the second synchronization signal includes a synchronization signal/PBCH block SSB.

In a possible implementation, receiving the second synchronization signal includes: receiving a second primary synchronization signal in the SSB based on the received first primary synchronization signal, where the second primary synchronization signal is in one-to-one correspondence with the first primary synchronization signal, and a sequence of the second primary synchronization signal is determined based on a sequence of the first primary synchronization signal.

Specifically, the first primary synchronization signal and the second primary synchronization signal may be the same or may be different. The first primary synchronization signal and the second primary synchronization signal may be sequences in different forms that are generated by using same information. The second primary synchronization signal may be determined based on the first primary synchronization signal.

It should be understood that when the first synchronization signal is a PSS, the first synchronization signal may also be referred to as a wide-beam PSS. When the second synchronization signal is an SSB, the SSB may be referred to as a narrow-beam SSB. Specific names are not limited in this application.

It should be understood that a structure of the SSB shown in FIG. 8 is merely used as an example. Specific structures and time domain positions of the first synchronization signal and the second synchronization signal are not specifically limited in embodiments of this application.

It should be further understood that signal content of the SSB shown in FIG. 8 is merely used as an example. The first synchronization signal and the second synchronization signal are two synchronization signals that are used for beam alignment and do not overlap in time domain. Content of the first synchronization signal and the second synchronization signal is not specifically limited in embodiments of this application.

In a possible implementation, a quantity of first synchronization signals is greater than or equal to a quantity of second synchronization signals within a first duration.

Specifically, the first synchronization signal may be in a first signal set, and the first signal set may be continuously sent. The second synchronization signal may be in a second signal set, and the second signal set may be sent periodically. Because the first synchronization signal is sent by using a wide beam and the second synchronization signal is sent by using a narrow beam, a period of time, a quantity of transmission beams for first synchronization signals that cover the terminal device is greater than a quantity of transmission beams for second synchronization signals that cover the terminal device.

In a possible implementation, the second synchronization signal is after the first synchronization signal, and the second synchronization signal is adjacent to the first synchronization signal in time domain.

Specifically, one first signal set in FIG. 8 may include a plurality of slots, and a position of a first synchronization signal in one slot in the first signal set is adjacent, in time domain, to a position of a second synchronization signal in one slot in the second signal set that is sent in association.

Still refer to FIG. 8. In the scenario in which the subcarrier spacing is 15 kHz, the network device sends the second synchronization signal on a symbol following a symbol on which the first synchronization signal is sent. The first synchronization signal and the second synchronization signal occupy five symbols in total.

Specifically, in the scenario in which the subcarrier spacing is 15 kHz, in one slot in the first signal set, a time domain position of the first synchronization signal is a symbol 2 and a symbol 8. When the first signal set and the second signal set that are sent by the network device correspond to a same slot, the first synchronization signal is located before a time domain position of the second synchronization signal, that is, the time domain position of the second synchronization signal is a symbol 3 to a symbol 6 and a symbol 9 to a symbol 12 in the slot.

Specifically, in the scenario in which the subcarrier spacing is 15 kHz, in one slot in the first signal set, the time domain position of the first synchronization signal is a symbol 2 and a symbol 8. Because a quantity of second synchronization signals sent by the network device may be less than a quantity of first synchronization signals within a period of time, when the first synchronization signal and the second synchronization signal that are sent by the network device do not correspond to the same time domain, the network device only sends the first synchronization signal on the symbol 2 and the symbol 8, and does not need to send the second synchronization signal correspondingly on the symbol 3 to the symbol 6 and the symbol 9 to the symbol 12.

Further, in the scenario in which the subcarrier spacing is 15 kHz, in one slot in which the network device correspondingly sends the first synchronization signal and the second synchronization signal, for coexistence with a scenario in which the subcarrier spacing is 30 kHz, the network device needs to reserve a symbol 7 as a downlink control channel with a subcarrier spacing of 30 kHz when sending the first synchronization signal and the second synchronization signal.

It should be understood that because a frequency division duplexing (frequency division duplexing, FDD) mode is usually used in an NTN scenario, in a structure of a downlink frame sent by the network device, an uplink control channel resource does not need to be reserved. Therefore, the second synchronization signal may occupy a symbol 12.

In this embodiment of this application, the second synchronization signal is adjacent to the corresponding first synchronization signal in time domain, so that the terminal device can immediately perform detection on the second synchronization signal after detecting the first synchronization signal. In other words, the terminal device can perform detection on the second synchronization signal in adjacent and determined time domain, reducing system overheads of the terminal device.

In a possible implementation, the second synchronization signal has a same frequency domain center point as the first synchronization signal.

Specifically, refer to FIG. 8. The first synchronization signal in FIG. 8 may be a first primary synchronization signal, and a frequency domain center point of the first primary synchronization signal is aligned with a frequency domain center point of a synchronization signal in each symbol in the second synchronization signal. For example, the frequency domain center point of the first primary synchronization signal is aligned with a frequency domain center point of a PSS in the second synchronization signal.

In this embodiment of this application, after detecting the first synchronization signal, the terminal device may perform detection on the second synchronization signal in a frequency band with the same frequency domain center point. Therefore, detection overheads of the terminal device are reduced.

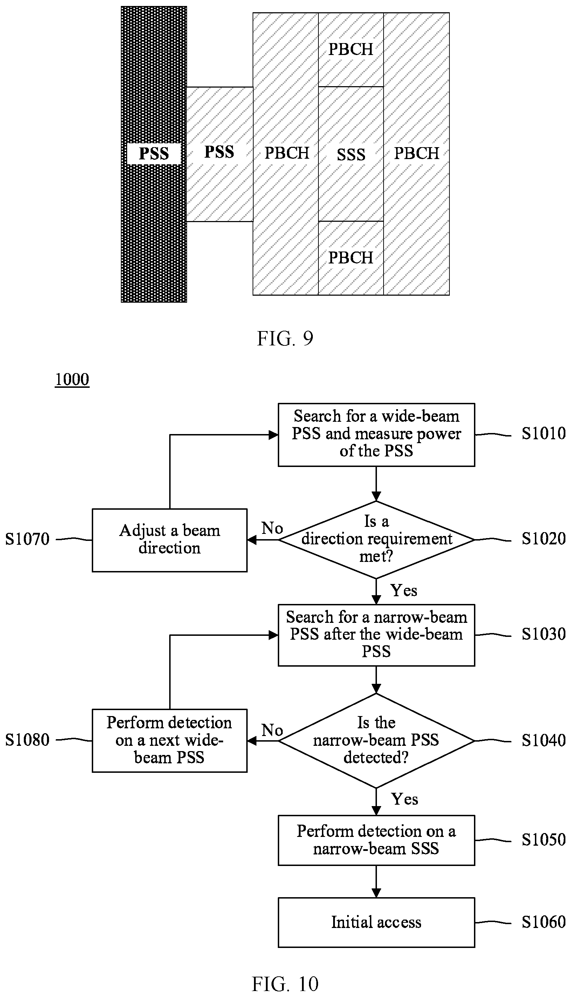

FIG. 9 is a diagram of another structure of a broadcast signal according to an embodiment of this application.

In a possible implementation, a sequence length of the first primary synchronization signal is greater than a sequence length of the second primary synchronization signal.

Specifically, because the first primary synchronization signal is sent by using a wide beam, and the wide beam causes a loss of beam gain, the network device may use a longer sequence, to enhance beam alignment performance.

Refer to FIG. 8 and FIG. 9. The structure of the broadcast signal shown in FIG. 9 may be used in a frame structure of the design of the broadcast signal shown in FIG. 8. A sequence of the first synchronization signal shown in FIG. 8 may be an m-sequence, where a length of the m-sequence is 2*^{N}* - 1. The structure of the broadcast signal in FIG. 8 may be replaced with the structure of the broadcast signal shown in FIG. 9. In other words, a longer sequence length may be used for the sequence of the first synchronization signal in FIG. 8. For example, a sequence length of the first synchronization signal is greater than 127.

For example, an m-sequence having a length of 255 may be used for a sequence of the PSS in FIG. 8 and FIG. 9.

In this embodiment of this application, because a beam width of the first primary synchronization signal is greater than a beam width of the second primary synchronization signal, and a wide beam causes a loss of beam gain, the network device sends the first primary synchronization signal by using a sequence longer than that of the second primary synchronization signal, so that the terminal device can obtain a higher detection peak when detecting the first primary synchronization signal, and accuracy of determining, by the terminal device, that the first primary synchronization signal is received is improved, enhancing beam alignment performance between the terminal device and the network device, and compensating for the loss of the beam gain caused by the wide beam.

In a possible implementation, the network device repeatedly sends the first synchronization signal on a plurality of frequency bands.

In this embodiment of this application, because a beam width of the first synchronization signal is greater than a beam width of the second synchronization signal, and a wide beam causes a loss of beam gain, the network device repeatedly sends the first synchronization signal on the plurality of frequency bands, so that the terminal device can receive more first synchronization signals within a period of time, increasing an opportunity for the terminal device to receive a first synchronization signal whose power meets a requirement, and reducing time required for the terminal device during initial access.

In a possible implementation, the network device repeatedly sends the first synchronization signal in time domain.

In this embodiment of this application, because the beam width of the first synchronization signal is greater than the beam width of the second synchronization signal, and a wide beam causes a loss of beam gain, the network device repeatedly sends the first synchronization signal in time domain, so that there can be more wide-beam first synchronization signals for covering the terminal device within a specific time period, increasing an opportunity for the terminal device to receive a first synchronization signal whose power meets a requirement, and reducing time required for the terminal device during initial access.

FIG. 10 is a flowchart of another initial access procedure 1000 of a terminal device according to an embodiment of this application.

It should be understood that, in the initial access procedure of the terminal device shown in FIG. 10, an example in which a pattern of a synchronization signal block is shown in FIG. 9 is used, that is, a first synchronization signal is a wide-beam PSS, a second synchronization signal is a narrow-beam SSB, and a second primary synchronization signal in the second synchronization signal is a narrow-beam PSS. A PSS and an SSB in FIG. 10 may alternatively be other synchronization signals generated based on a PCI or a part of the PCI. This is not specifically limited in this application.

S1010: The terminal device selects an optional beam direction to search for a wide-beam PSS. After the terminal device detects the wide-beam PSS, the terminal device measures power of the PSS, and the terminal device performs S1020.

For example, the terminal device adjusts one reception beam direction every 0.5 ms, and attempts to perform detection on the wide-beam PSS.

S1020: The terminal device determines whether the detected wide-beam PSS meets a direction requirement.

Specifically, when the power of the wide-beam PSS detected by the terminal device is greater than or equal to a threshold, the terminal device performs S1030; or when the power of the wide-beam PSS detected by the terminal device is less than the threshold, the terminal device performs S1070.

Optionally, when the power of the wide-beam PSS detected by the terminal device is greater than or equal to -100 dBm, the terminal device searches for a narrow-beam SSS after the wide-beam PSS. When the power of the PSS detected by the terminal device is less than -100 dBm, the terminal device adjusts a beam direction, and continues to search for the wide-beam PSS.

Optionally, the terminal device selects a beam direction with maximum received power from all reception beams to search for the SSS.

S1070: When the wide-beam PSS detected by the terminal device does not meet the direction requirement, the terminal device adjusts the beam direction, and returns to perform S1010.

S1030: In a possible implementation, the terminal device receives the second synchronization signal, including: receiving the second synchronization signal based on the received first synchronization signal.

In a possible implementation, receiving the second synchronization signal based on the received first synchronization signal includes: receiving the second synchronization signal based on a reception beam direction of the first synchronization signal or a reception beam codebook of the first synchronization signal.

In a possible implementation, the terminal device may further receive the second synchronization signal based on a time-frequency resource of the first synchronization signal or ${N}_{ID}^{\left(2\right)}$ in the first synchronization signal.

For example, as shown in FIG. 10, after the terminal device detects a wide-beam PSS that meets the direction requirement, the terminal device searches for the narrow-beam PSS by using a beam that is in a same reception beam direction as the wide-beam PSS.

In this embodiment of this application, the terminal device receives the second synchronization signal based on the received first synchronization signal, where a width of a transmission beam for the first synchronization signal is greater than a width of a transmission beam for the second synchronization signal, and a coverage area of the transmission beam for the first synchronization signal includes coverage areas of transmission beams for a plurality of second synchronization signals, so that within a period of time, a quantity of first synchronization signals that cover the terminal device is greater than a quantity of second synchronization signals that cover the terminal device. Therefore, in comparison with directly receiving the second synchronization signal, the terminal device can be more quickly aligned with a network device, so that the terminal performs detection on the second synchronization signal based on alignment with the network device, reducing time required for the terminal device during initial access.

In a possible implementation, the terminal device performs detection on the narrow-beam PSS on the 1^{st} symbol after the detected wide-beam PSS.

Specifically, still refer to FIG. 8. The terminal device performs detection on the narrow-beam PSS on next symbols, that is, a symbol 3 and a symbol 9, after the detected wide-beam PSS that meets the direction requirement. Because a quantity of wide-beam PSSs that can be received by the terminal device within a time period is less than a quantity of narrow-beam PSSs that can be received by the terminal device within the time period, the narrow-beam PSS may exist on a next symbol after any wide-beam PSS. For a determining procedure of the terminal device, refer to S1040.

S1040: In a possible implementation, receiving the second synchronization signal includes: receiving the second primary synchronization signal, that is, the narrow-beam PSS, in the SSB based on a received first primary synchronization signal, that is, the wide-beam PSS, where the second primary synchronization signal is in one-to-one correspondence with the first primary synchronization signal, and a sequence of the second primary synchronization signal is determined based on a sequence of the first primary synchronization signal.

In this embodiment of this application, the second primary synchronization signal is in one-to-one correspondence with the first primary synchronization signal, and the sequence of the second primary synchronization signal is determined based on the sequence of the first primary synchronization signal. In other words, the terminal device may determine information about the second primary synchronization signal based on information in the received first primary synchronization signal. Therefore, the terminal device does not need to perform blind detection during receiving of the second primary synchronization signal, reducing detection overheads of the terminal device.

Specifically, if the terminal device detects the narrow-beam PSS, the terminal device performs S1050, that is, performs detection on the narrow-beam SSS; or if the terminal device does not detect the narrow-beam PSS, the terminal device performs S1080.

S1080: The terminal device keeps a reception beam direction unchanged, and attempts to perform detection on a next wide-beam PSS. After detecting a next wide-beam PSS that meets the direction requirement, the terminal device returns to perform S1030, that is, the terminal device performs detection on the narrow-beam PSS on a next symbol after the next detected wide-beam PSS that meets the direction requirement.

S1050: The terminal device performs detection on the narrow-beam SSS.

In a possible implementation, the terminal device receives a secondary synchronization signal SSS in the SSB based on the received second primary synchronization signal, that is, the narrow-beam PSS.

In this embodiment of this application, once the terminal device detects the second primary synchronization signal, the terminal device detects the second synchronization signal. Therefore, the narrow-beam SSS definitely exists after the second primary synchronization signal. In this way, the terminal device avoids repeatedly performing an SSS blind detection operation to determine whether a symbol is the SSS, reducing blind detection overheads for the narrow-beam SSS.

In a possible implementation, the terminal device performs detection on the narrow-beam SSS on the 2^{nd} symbol after the detected narrow-beam PSS.

It should be understood that, in embodiments of this application, a time domain position of a synchronization signal and a time domain position relationship between synchronization signals are merely examples. This is not specifically limited in this application.

Specifically, the SSS definitely exists after the narrow-beam PSS. For example, the SSS may be located on the 2^{nd} symbol after the narrow-beam PSS. Therefore, when performing detection on the SSS, the terminal device can detect the SSS by performing blind detection only once at a determined time domain position, reducing system overheads of the terminal device.

For example, there may be 336 indexes of an SSS in a second signal, and a signal detected by the terminal device on the 2^{nd} symbol after the detected narrow-beam PSS is definitely one of signal sequences corresponding to the 336 indexes of the SSS.

S1060: In a possible implementation, the terminal device receives a physical broadcast channel PBCH based on the second primary synchronization signal, that is, the narrow-beam PSS, and the SSS, to perform initial access.

Specifically, the terminal device calculates *N_{ID}* based on ${N}_{ID}^{\left(2\right)}$ and ${N}_{ID}^{\left(1\right)}$ in the detected PSS and SSS, parses a PBCH in the second synchronization signal to obtain a PBCH payload and a MIB, and further parses a SIB message. The terminal device completes initial access based on a MIB message and the SIB message.

In a possible implementation, in the initial access process shown in FIG. 10, the terminal device performs beam sweeping, searches for the wide-beam PSS in different beam directions, and performs detection on the power of the wide-beam PSS. When the power of the detected wide-beam PSS meets an access requirement, that is, when a beam direction meets the direction requirement, the terminal device searches, after the wide-beam PSS, for the narrow-beam PSS sent by the network device. If the terminal device cannot find, in a beam direction, the wide-beam PSS whose power meets the access requirement, it indicates that the beam direction currently selected by the terminal device does not meet the direction requirement. The terminal device continues to adjust the beam direction, and the terminal device continues to attempt to search for the PSS in an adjusted beam direction.

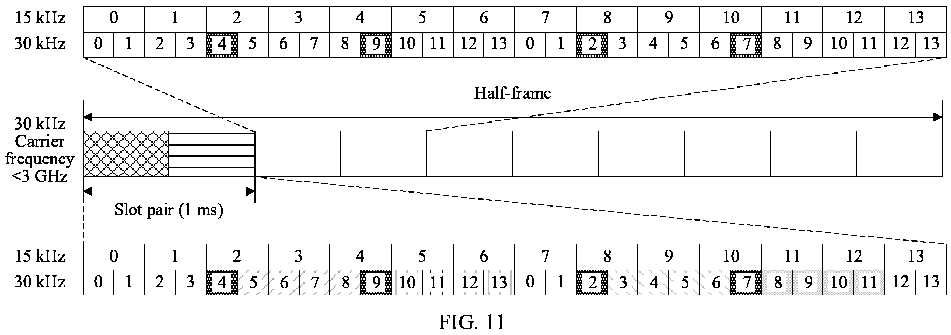

FIG. 11 is a diagram of still another design of a broadcast signal according to an embodiment of this application.

Specifically, in the diagram of the design of the broadcast signal shown in FIG. 11, a scenario in which a subcarrier spacing is 30 kHz is used as an example. A second synchronization signal may be in a second signal set, and the second signal set may include four second synchronization signals, occupying a 1^{st} slot pair in one half-frame. A first synchronization signal may be in a first signal set, and the first signal set may include a plurality of slot pairs shown in FIG. 11 that include the first synchronization signal.

Specifically, in the scenario in which the subcarrier spacing is 30 kHz, in one slot pair in the first signal set, a time domain position of the first synchronization signal is a symbol 4 and a symbol 9 in a 1^{st} slot in the slot pair, and a symbol 2 and a symbol 7 in a 2^{nd} slot in the slot pair. When the first synchronization signal and the second synchronization signal that are sent by a network device overlap in the time domain, a time domain position of the second synchronization signal in the 1^{st} slot in the slot pair is a symbol 5 to a symbol 8 and a symbol 10 to a symbol 13, and a time domain position of a narrow-beam SSB in the 2^{nd} slot in the slot pair is a symbol 3 to a symbol 6 and a symbol 8 to a symbol 11.

It should be understood that, in embodiments of this application, a time domain position of a synchronization signal and a time domain position relationship between synchronization signals are merely examples. This is not specifically limited in this application.

Specifically, in the scenario in which the subcarrier spacing is 30 kHz, in one slot in the first signal set, the time domain position of the first synchronization signal is a symbol 4 and a symbol 9 in a 1^{st} slot in the slot pair, and a symbol 2 and a symbol 7 in a 2^{nd} slot in the slot pair. In this embodiment of this application, because within a period of time, a quantity of first synchronization signals that cover a terminal device is greater than a quantity of second synchronization signals that cover the terminal device, when the first signal set and the second signal set that are sent by the network device do not overlap in the time domain, the network device only sends the first synchronization signal on the symbol 4 and the symbol 9 in the 1^{st} slot in the slot pair and the symbol 2 and the symbol 7 in the 2^{nd} slot in the slot pair, and does not need to correspondingly send the second synchronization signal after the first synchronization signal.

Further, in the scenario in which the subcarrier spacing is 30 kHz, in one slot in which the network device correspondingly sends the first synchronization signal and the second synchronization signal, for coexistence with the scenario in which the subcarrier spacing is 30 kHz, the network device needs to reserve a symbol 7 as a downlink control channel with a subcarrier spacing of 30 kHz when sending the first synchronization signal and the second synchronization signal.

It should be understood that because a frequency division duplexing (frequency division duplexing, FDD) mode is usually used in an NTN scenario, in a structure of a downlink frame sent by the network device, an uplink control channel resource does not need to be reserved. Therefore, in the scenario in which the subcarrier spacing is 30 kHz, the first synchronization signal and the second synchronization signal in one slot pair may be alternatively located at other positions that do not affect a downlink control channel. The downlink control channel is a downlink control channel in subcarrier frame structures when 30 kHz and 15 kHz coexist.

Specifically, in the scenario in which the subcarrier spacing is 30 kHz, in one slot pair in which the network device correspondingly sends the first synchronization signal and the second synchronization signal, the network device reserves a symbol 0 to a symbol 3 in a 1^{st} slot in the slot pair. The symbol 0 and the symbol 1 are used as a downlink control channel in the scenario of a subcarrier spacing of 30 kHz, and the symbol 0 to the symbol 3 correspond to a symbol 0 and a symbol 1 in a 1^{st} slot in a scenario of a subcarrier spacing of 15 kHz, as a downlink control channel in the coexisting scenario of a subcarrier spacing of 15 kHz. The network device reserves a symbol 0 and a symbol 1 in a 2^{nd} slot in the slot pair as a downlink control channel in the 2^{nd} slot in the slot pair. Remaining symbol positions may be used to carry the first synchronization signal and the second synchronization signal.

For example, in one slot pair in the first signal set, a position of the first synchronization signal may be a symbol 4 and a symbol 9 in a 1^{st} slot in the slot pair and a symbol 4 and a symbol 9 in a 2^{nd} slot in the slot pair. The second synchronization signal is located after the first synchronization signal and is adjacent to the first synchronization signal. In other words, the second synchronization signal is located in a symbol 5 to a symbol 8 and a symbol 10 to a symbol 13 in the 1^{st} slot in the slot pair, and a symbol 5 to a symbol 8 and a symbol 10 to a symbol 13 in the 2^{nd} slot in the slot pair.

It should be understood that, in the scenario in which the subcarrier spacing is 30 kHz, a structure of a broadcast signal sent by the network device may be shown in FIG. 9, and an initial access procedure of the terminal device may be shown in FIG. 10. Specific steps of the initial access procedure are similar to the foregoing content. Details are not described herein again in this embodiment of this application.

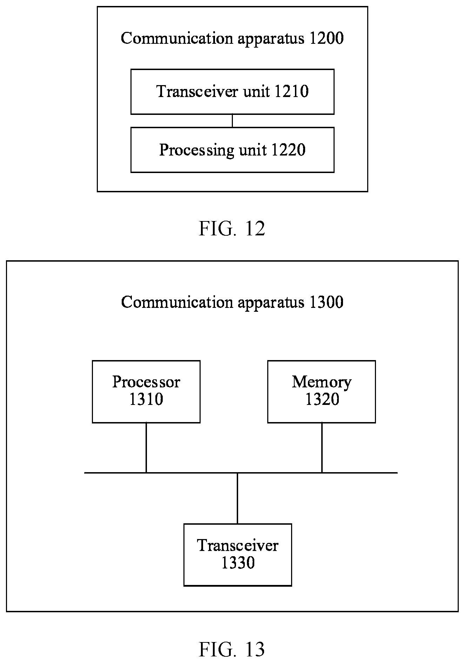

FIG. 12 is a diagram of a structure of a communication apparatus according to an embodiment of this application.

The apparatus 1200 includes a transceiver unit 1210 and a processing unit 1220. The transceiver unit 1210 may be configured to implement a corresponding communication function. The processing unit 1220 may be configured to perform data processing.

Optionally, the transceiver unit 1210 may also be referred to as a communication interface or a communication unit, and includes a sending unit and/or a receiving unit. The transceiver unit 1210 may be a transceiver (including a transmitter and/or a receiver), an input/output interface (including an input interface and/or an output interface), a pin, a circuit, or the like. The transceiver unit 1210 may be configured to perform a sending step and/or a receiving step in the foregoing method embodiments.

Optionally, the processing unit 1220 may be a processor (may include one or more processors), a processing circuit having a processor function, or the like, and may be configured to perform a step other than sending and receiving in the foregoing method embodiments.

Optionally, the apparatus 1200 further includes a storage unit. The storage unit may be a memory, an internal storage unit (for example, a register or a cache), an external storage unit (for example, a read-only memory or a random access memory), or the like. The storage unit is configured to store instructions. The processing unit 1220 executes the instructions stored in the storage unit, to cause the communication apparatus to perform the foregoing method.

In a design, the apparatus 1200 may be configured to perform an action performed by the terminal device in the foregoing method embodiments. For example, the apparatus 1200 may be configured to perform an action performed by the terminal device in the foregoing method 600 or 1000. In this case, the apparatus 1200 may be a component of the terminal device. The transceiver unit 1210 is configured to perform receiving and sending related operations of the terminal device in the foregoing method embodiments. The processing unit 1220 is configured to perform processing-related operations of the terminal device in the foregoing method embodiments.

For example, the transceiver unit 1210 is configured to receive a first synchronization signal. The transceiver unit 1210 is further configured to receive a second synchronization signal, where a width of a transmission beam for the first synchronization signal is greater than a width of a transmission beam for the second synchronization signal, and a coverage area of the transmission beam for the first synchronization signal includes coverage areas of transmission beams for a plurality of second synchronization signals. The processing unit 1220 is configured to receive a physical broadcast channel PBCH based on a second primary synchronization signal and an SSS.

It should be understood that the transceiver unit 1210 and the processing unit 1220 may further perform other operations performed by the terminal device in any step in the foregoing method 600 or 1000. Details are not described one by one herein again.

In a design, the apparatus 1200 may be configured to perform an action performed by the network device in the foregoing method embodiments. For example, the transceiver unit 1210 is configured to send a first synchronization signal. The transceiver unit 1210 is further configured to send a second synchronization signal, where a width of a transmission beam for the first synchronization signal is greater than a width of a transmission beam for the second synchronization signal, and a coverage area of the transmission beam for the first synchronization signal includes coverage areas of transmission beams for a plurality of second synchronization signals.

It should be further understood that the apparatus 1200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1200 may be specifically the network device in the foregoing embodiments, and may be configured to perform procedures and/or steps corresponding to the network device in the foregoing method embodiments. To avoid repetition, details are not described herein again.

The apparatus 1200 in each of the foregoing solutions has a function of implementing corresponding steps performed by the terminal device in the foregoing methods, or the apparatus 1200 in each of the foregoing solutions has a function of implementing corresponding steps performed by the network device in the foregoing methods. The function may be implemented by hardware, or may be implemented by executing corresponding software by hardware. The hardware or software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit such as a processing unit may be replaced with a processor, to separately perform sending and receiving operations and a related processing operation in the method embodiments.

In addition, the transceiver unit 1210 may alternatively be a transceiver circuit (for example, may include a receiver circuit and a transmitter circuit), and the processing unit may be a processing circuit.

It should be noted that the apparatus in FIG. 1200 may be the network element or the device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

FIG. 13 is a diagram of a communication architecture according to an embodiment of this application. The communication apparatus 1300 shown in FIG. 13 includes a processor 1310, a memory 1320, and a transceiver 1330. The processor 1310 is coupled to the memory 1320, and is configured to execute instructions stored in the memory 1320, to control the transceiver 1330 to send a signal and/or receive a signal.

It should be understood that the processor 1310 and the memory 1320 may be combined into one processing apparatus, and the processor 1310 is configured to execute program code stored in the memory 1320 to implement the foregoing function. During specific implementation, the memory 1320 may be integrated into the processor 1310, or may be independent of the processor 1310. It should be understood that the processor 1310 may alternatively correspond to each processing unit in the foregoing communication apparatus, and the transceiver 1330 may correspond to each receiving unit and sending unit in the foregoing communication apparatus.

It should be further understood that the transceiver 1330 may include a receiver (or referred to as a receiver machine) and a transmitter (or referred to as a transmitter machine). The transceiver may further include an antenna, and a quantity of antennas may be one or more. The transceiver may alternatively be a communication interface or an interface circuit.

Specifically, the communication apparatus 1300 may correspond to the terminal device in the method 600 or the method 1000 according to embodiments of this application. The communication apparatus 1300 may include a unit in the method performed by the terminal device in the method 600 or the method 1000. It should be understood that a specific process in which the units perform the foregoing corresponding steps is described in detail in the foregoing method embodiments, and for brevity, details are not described herein.

When the communication apparatus 1300 is a chip, the chip includes an interface unit and a processing unit. The interface unit may be an input/output circuit or a communication interface. The processing unit may be a processor, a microprocessor, or an integrated circuit integrated on the chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement the embodiments, all or part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

In embodiments of this application, the term such as "example" or "for example" is for representing giving an example, an illustration, or descriptions. Any embodiment or design scheme described as an "example" in this application should not be explained as being more preferred or having more advantages than another embodiment or design scheme. Exactly, the term "example" is for presenting a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, the terms "when" and "if" mean that a terminal device or a base station may perform corresponding processing in an objective situation, and are not intended to limit time, and the terminal device or the base station is not necessarily required to have a determining action during implementation, and do not mean any other limitation.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." in this specification represents all or any combination of the listed items. For example, "at least one of A, B, and C" may represent the following six cases: A exists alone, B exists alone, C exists alone, A and B coexist, B and C coexist, and A, B, and C coexist. In this specification, "at least one" means one or more. "A plurality of' indicates two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a first synchronization signal; and
receiving a second synchronization signal, wherein a width of a transmission beam for the first synchronization signal is greater than a width of a transmission beam for the second synchronization signal, and a coverage area of the transmission beam for the first synchronization signal comprises coverage areas of transmission beams for a plurality of second synchronization signals.

2. The method according to claim 1, wherein a quantity of first synchronization signals is greater than or equal to a quantity of second synchronization signals within a first duration.

3. The method according to claim 1 or 2, wherein the receiving the second synchronization signal comprises:
receiving the second synchronization signal based on the received first synchronization signal.

4. The method according to claim 3, wherein the receiving the second synchronization signal based on the received first synchronization signal comprises:
receiving the second synchronization signal based on a reception beam direction of the first synchronization signal or a reception beam codebook of the first synchronization signal.

5. The method according to any one of claims 1 to 4, wherein the second synchronization signal has a same frequency domain center point as the first synchronization signal.

6. The method according to any one of claims 1 to 5, wherein the first synchronization signal comprises a synchronization signal generated based on a physical cell identifier PCI or a part of the PCI, and the second synchronization signal comprises a synchronization signal generated based on the PCI or a part of the PCI.

7. The method according to any one of claims 1 to 6, wherein the first synchronization signal comprises a primary synchronization signal PSS, and the second synchronization signal comprises a secondary synchronization signal SSS.

8. The method according to claim 7, wherein a sequence length of the PSS is greater than a sequence length of the SSS.

9. The method according to any one of claims 1 to 6, wherein the first synchronization signal comprises a first primary synchronization signal, and the second synchronization signal comprises a synchronization signal/PBCH block SSB.

10. The method according to claim 9, wherein the receiving the second synchronization signal comprises:
receiving a second primary synchronization signal in the SSB based on the received first primary synchronization signal, wherein the second primary synchronization signal is in one-to-one correspondence with the first primary synchronization signal, and a sequence of the second primary synchronization signal is determined based on a sequence of the first primary synchronization signal.

11. The method according to claim 9 or 10, wherein a sequence length of the first primary synchronization signal is greater than a sequence length of the second primary synchronization signal.

12. The method according to claim 10 or 11, wherein the receiving the second synchronization signal further comprises:
receiving a secondary synchronization signal SSS in the SSB based on the received second primary synchronization signal.

13. The method according to claim 12, further comprising:
receiving a physical broadcast channel PBCH based on the second primary synchronization signal and the SSS.

14. The method according to any one of claims 1 to 13, wherein the first synchronization signal is repeatedly sent on a plurality of frequency bands.

15. A communication method, comprising:
sending a first synchronization signal; and
sending a second synchronization signal, wherein a width of a transmission beam for the first synchronization signal is greater than a width of a transmission beam for the second synchronization signal, and a coverage area of the transmission beam for the first synchronization signal comprises coverage areas of transmission beams for a plurality of second synchronization signals.

16. The method according to claim 15, wherein a quantity of first synchronization signals is greater than or equal to a quantity of second synchronization signals within a first duration.

17. The method according to claim 15 or 16, wherein the second synchronization signal has a same frequency domain center point as the first synchronization signal.

18. The method according to any one of claims 15 to 17, wherein the first synchronization signal comprises a synchronization signal generated based on a physical cell identifier PCI or a part of the PCI, and the second synchronization signal comprises a synchronization signal generated based on the PCI or a part of the PCI.

19. The method according to any one of claims 15 to 18, wherein the first synchronization signal comprises a first primary synchronization signal PSS, and the second synchronization signal comprises a secondary synchronization signal SSS.

20. The method according to claim 19, wherein a sequence length of the primary synchronization signal is greater than a sequence length of the secondary synchronization signal.

21. The method according to any one of claims 15 to 18, wherein the first synchronization signal comprises a first primary synchronization signal PSS, the second synchronization signal comprises a synchronization signal/PBCH block SSB, the SSB comprises a second primary synchronization signal, the second primary synchronization signal is in one-to-one correspondence with the first primary synchronization signal, and a sequence of the second primary synchronization signal is determined based on a sequence of the first primary synchronization signal.

22. The method according to claim 21, wherein a sequence length of the first primary synchronization signal is greater than a sequence length of the second primary synchronization signal.

23. The method according to any one of claims 15 to 22, wherein the sending the first synchronization signal comprises:
repeatedly sending the first synchronization signal on a plurality of frequency bands.

24. A communication apparatus, wherein the communication apparatus is configured to perform the method according to any one of claims 1 to 14 or 15 to 23.

25. A communication apparatus, comprising a processor, wherein the processor is configured to cause the communication apparatus to perform the method according to any one of claims 1 to 14, or is configured to cause the communication apparatus to perform the method according to any one of claims 15 to 23.

26. The communication apparatus according to claim 25, further comprising a memory, wherein the processor is configured to invoke computer program instructions stored in the memory, to perform the method according to any one of claims 1 to 14, or the method according to any one of claims 15 to 23.

27. A computer-readable storage medium, wherein the computer-readable storage medium stores computer instructions, and when the computer instructions are run on a computer, the method according to any one of claims 1 to 14 is performed, or the method according to any one of claims 15 to 23 is performed.

28. A computer program product, wherein the computer program product comprises computer program code, and when the computer program code is run on a computer, the method according to any one of claims 1 to 14 is performed, or the method according to any one of claims 15 to 23 is performed.
